# EUROPEAN PATENT SPECIFICATION

(11) **EP 2 071 161 B1**
(45) Date of publication and mention of the grant of the patent: **28.12.2011**
(21) Application number: 07768362.1
(22) Date of filing: 09.07.2007
(51) Int. Cl.: F02M 25/07, F02D 21/08, F02B 23/00

(54) **FOUR-CYCLE INTERNAL COMBUSTION ENGINE**
VIERTAKT-VERBRENNUNGSMOTOR
MOTEUR À COMBUSTION INTERNE À QUATRE TEMPS

(30) Priority: 25.07.2006 JP 2006202614; 29.06.2007 JP 2007172933
(43) Date of publication of application: 17.06.2009
(73) Proprietor: Yamaha Hatsudoki Kabushiki Kaisha, Iwata-shi, Shizuoka 438-8501 (JP)
(72) Inventor: HIGAKI, Yoshiyuki, Iwata-shi Shizuoka 438-8501 (JP); TAKII, Osamu, Iwata-shi Shizuoka 438-8501 (JP); SERIKAWA, Hirofumi, Iwata-shi Shizuoka 438-8501 (JP)
(74) Representative: Grünecker, Kinkeldey, Stockmair & Schwanhäusser
(86) International application number: PCT/JP2007/063638
(87) International publication number: WO 2008/013045

(56) References cited:
- EP-A- 0 953 744
- DE-A1- 3 903 474
- FR-A- 2 864 166
- JP-A- 5 086 992
- JP-A- 05 086 992
- JP-A- 54 049 405
- JP-A- 54 049 405
- JP-A- 56 044 404
- JP-U- 03 095 062
- JP-U- 57 026 631

## Description

### Technical Field

The present invention relates to a four stroke internal combustion engine according to the preamble of claim 1. Such an engine is known from FR 2 864 166.

### Background Art

Conventionally, four stroke internal combustion engines having an exhaust gas re-circulation (EGR) system which returns a part of exhaust gases to a combustion chamber to moderate burning of air/ fuel mixture and lower the maximum combustion temperature in the combustion chamber to decrease nitrogen oxides (NOx) are widely used.

For example, an EGR structured as described below is known (see Patent Document 1, for example). Specifically, the EGR includes an auxiliary exhaust valve in an auxiliary exhaust port connected to a combustion chamber and a gas reserving chamber reserving a part (EGR gases) of burned gases discharged through the auxiliary exhaust port. The EGR gases reserved in the gas reserving chamber is returned to the combustion chamber at a preset time.
Patent Document 1
   JP-A-Hei 5-86992 (pages 4 to 5 and FIGs. 4 to 5)

### Disclosure of the Invention

According to such a four stroke internal combustion engine having the conventional exhaust gas re-circulation system (EGR) described above, improvement of fuel consumption resulting from decrease of pumping loss can be obtained. In recent years, however, further improvement of fuel consumption has been desired.

Also, the four stroke internal combustion engine having the conventional EGR described above requires the auxiliary exhaust gas port and the auxiliary exhaust gas valve in addition to a main exhaust gas port and a main exhaust gas valve for discharging exhaust gases.

Thus, there was a problem such that a structure of the cylinder head part is complicated to invite an increase in manufacturing costs or others.

Therefore, the present invention is made under the circumstances, and aims to provide a four stroke engine that can further improve fuel consumption and can decrease nitrogen oxides (NOx), without making the structure of the cylinder head portion complicated.

In order to solve the problem described above, the present invention provides an engine according to claim 1. First of all, the gist of a first feature of the first invention is that a four stroke internal combustion engine (engine) 10 including a combustion chamber 40, an intake passage (intake port) 21 opening to the combustion chamber, an exhaust passage (exhaust port) 31 opening to the combustion chamber, an intake valve 22 opening or closing a combustion chamber side opening of the intake passage, and an exhaust valve 32 opening or closing a combustion chamber side opening of the exhaust passage, includes a gas reserving chamber 100 communicating with the exhaust passage and reserving burned gases G discharged from the combustion chamber, that the burned gases flow into the gas reserving chamber while the exhaust valve opens in an expansion stroke or an exhaust stroke, and that the burned gases reserved in the gas reserving chamber are discharged to the combustion chamber while the exhaust valve opens in an intake stroke.

According to the above feature, an internal EGR amount can be larger than before. The pumping loss decreases, accordingly.

Also, according to the above feature, because the gas reserving chamber that communicates with the exhaust passage and reserves the burned gases discharged from the combustion chamber is provided, no special intake and exhaust passages and valves for communicating with the gas reserving chamber are necessary.

That is, according to the above feature, a four stroke engine that can further improve fuel consumption and can decrease nitrogen oxides (NOx), without making the structure of the cylinder head part complicated, can be provided.

The gist of a second feature of the first invention is, in addition to the gist of the first feature, that the burned gases flow into the gas reserving chamber while the exhaust valve opens in the expansion stroke and the burned gases are discharged to the combustion chamber while the exhaust valve opens in the intake stroke.

The gist of a third feature of the first invention is, in addition to the gist of the first feature, that the time at which the burned gases are discharged to the combustion chamber exists in an overlap time period in which both of the intake valve and the exhaust valve open.

The gist of a fourth feature of the first invention is, in addition to the gist of the first feature, that the exhaust valve is formed with a valve head 32a which opens or closes the opening to the combustion chamber and a stem 32b extending from the valve head, and that a gas communicating passage (burned gas guiding conduit) 110 communicating with the gas reserving chamber from a portion of the exhaust gas passage in the vicinity of the valve head is further provided.

The gist of a fifth feature of the first invention is, in addition to the gist of the fourth feature, that an end portion 110e of the gas communicating passage closer to the valve head is oriented in a direction which parallels a peripheral portion 40p of the combustion chamber.

The gist of a sixth feature of the first invention is, in addition to the gist of the first feature, that a fresh air reserving chamber 69 communicating with the intake passage and reserving fresh air which flows in the intake passage is provided, and that the air reserved in the fresh air reserving chamber is introduced into the combustion chamber while the intake valve opens in the intake stroke.

The gist of a seventh feature of the first invention is, in addition to the gist of the first feature, that a fresh air reserving chamber 69 reserving fresh air which flows in the intake passage and a first fresh air communicating passage 70 communicating with the fresh air reserving chamber and a portion of the intake passage in the vicinity of the combustion chamber side opening are provided, that the fresh air flows into the fresh air reserving chamber through the first fresh air communicating passage in accordance with pressure change in the intake passage, and that the fresh air reserved in the fresh air reserving chamber is introduced into the combustion chamber through the first fresh air communicating passage while the intake valve opens in the intake stroke.

The gist of an eighth feature of the first invention is, in addition to the gist of the seventh feature, that a second fresh air communicating passage communicating with the fresh air reserving chamber and the intake passage is provided, that the fresh air flows into the fresh air reserving chamber through the first and second air communicating passages in accordance with pressure change in the intake passage, and that the fresh air reserved in the fresh air reserving chamber is introduced into the combustion chamber through the first fresh air communicating passage while the intake valve opens in the intake stroke.

The gist of a ninth feature of the first invention is, in addition to the gist of the eighth feature, that the second fresh air communicating passage communicates with a portion of the intake passage located downstream and in the vicinity of a throttle valve of the intake passage.

The gist of a tenth feature of the first invention is, in addition to the gist of the sixth feature, that the gas communicating passage through which the gas reserving chamber and the portion of the exhaust passage in the vicinity of the combustion chamber side opening communicate with each other is arranged to be oriented in a tangential direction relative to an inner circumference of the combustion chamber.

The gist of an eleventh feature of the first invention is, in addition to the gist of the tenth feature, that the first fresh air communicating passage through which the fresh air reserving chamber and the portion of the intake passage located in the vicinity of the combustion chamber side opening communicate with each other is arranged to make a tangent relative to a concentric circle defined to be closer to the center of the combustion chamber.

The gist of a first feature of the second invention is that a four stroke internal combustion engine including a combustion chamber, an intake passage opening to the combustion chamber, an exhaust passage opening to the combustion chamber, an intake valve opening or closing a combustion chamber side opening of the intake passage, and an exhaust valve opening or closing a combustion chamber side opening of the exhaust passage, includes a fresh air reserving chamber 69 communicating with the intake passage through a first fresh air communicating passage 70 and reserving fresh air which flows in the intake passage, and that the fresh air reserved in the fresh air reserving chamber 69 is introduced into the combustion chamber while the intake valve opens in an intake stroke.

The gist of a second feature of the second invention is, in addition to the gist of the first feature of the second invention, that a second fresh air communicating passage 71 through which the fresh air reserving chamber 69 and the intake passage communicate with each other is provided, that the fresh air flows into the fresh air reserving chamber 69 through the first and second fresh air communicating passages 70, 71 while the intake valve closes, and that the fresh air reserved in the fresh air reserving chamber 69 is introduced into the combustion chamber through the first fresh air communicating passage 70 while the intake valve opens in the intake stroke.

The gist of a third feature of the second invention is, in addition to the gist of the second feature of the second invention, that the second fresh air communicating passage communicates with a portion of the intake passage located downstream and in the vicinity of a throttle valve 65 of the intake passage.

The gist of a first feature of the third invention is that a four stroke internal combustion engine including a combustion chamber, an intake passage opening to the combustion chamber, an exhaust passage opening to the combustion chamber, an intake valve opening or closing a combustion chamber side opening of the intake passage, an exhaust valve opening or closing a combustion chamber side opening of the exhaust passage, and a throttle valve which changes a passage area of the intake passage, includes a third fresh air communicating passage through which a portion of the intake passage located downstream the throttle valve and in the vicinity of the throttle valve and another portion of the intake passage located in the vicinity of the combustion chamber side opening communicate with each other, and that a downstream end of the third fresh air communicating passage is arranged to be oriented in a tangential direction relative to an inner circumference of the combustion chamber.

The gist of a first feature of the fourth invention is that a four stroke internal combustion engine (for example, engine 11) including a combustion chamber (combustion chamber 40), a combustion chamber defining section (cylinder block 11sb and cylinder head 11sh) defining the combustion chamber, an intake passage (intake port 21C) opening to the combustion chamber, an exhaust passage (exhaust port 31C) opening to the combustion chamber, an intake valve (intake valve 22C) opening or closing a combustion chamber side opening of the intake passage, and an exhaust valve (exhaust valve 32C) opening or closing a combustion chamber side opening of the exhaust passage, that the combustion chamber defining section has a gas reserving chamber (gas reserving chamber 120) communicating with the exhaust passage and reserving burned gases discharged from the combustion chamber, that the burned gases flow into the gas reserving chamber while the exhaust valve opens in an expansion stroke or an exhaust stroke, and that the burned gases reserved in the gas reserving chamber are discharged to the combustion chamber while the exhaust valve opens in an intake stroke.

According to the above feature, because the gas reserving chamber communicating with the exhaust passage is disposed in the combustion chamber defining section, the four stroke internal combustion engine can be downsized and assembling work of the four stroke internal combustion engine can be easily done, in comparison with another arrangement in which the gas reserving chamber is disposed outside the combustion chamber defining section.

The gist of a second feature of the fourth invention is, in addition to the gist of the first feature of the fourth invention, that the gas reserving chamber includes a gas reserving section (gas reserving section 120a) reserving the burned gases and a gas communicating passage section (gas communicating passage section 120c) through which the gas reserving section and the exhaust passage communicate with each other, that the combustion chamber defining section includes a cylinder block (cylinder block 11sb and a cylinder head (cylinder head 11sh) having a mating surface (mating surface 11a) which faces the cylinder block, that the gas reserving section is formed in the cylinder head and has a cylinder head opening (opening 120b) which opens to the mating surface, and that the cylinder block and the cylinder head are coupled with each other to close the cylinder head opening.

The gist of a third feature of the fourth invention is, in addition to the gist of the first feature of the fourth invention, that the gas reserving chamber (gas reserving chamber 140) includes a gas reserving section (gas reserving section 140a) reserving the burned gases and a gas communicating passage section (gas communicating passage section 140c) through which the gas reserving section and the exhaust passage communicate with each other, that the combustion chamber defining section includes a cylinder block (cylinder block 14sb) and a cylinder head (cylinder head 14sh) having a mating surface (mating surface 14a) which faces the cylinder block, that the gas reserving section is formed in the cylinder block and has a cylinder block opening (opening 140b) which opens to the mating surface, and that the cylinder block and the cylinder head are coupled with each other to close the cylinder block opening.

The gist of a fourth feature of the fourth invention is, in addition to the gist of the first feature of the fourth invention, that the gas reserving chamber (gas reserving chamber 150) includes a gas reserving section (gas reserving section 150a) reserving the burned gases and a gas communicating passage section (gas communicating passage section 150d) through which the gas reserving section and the exhaust passage communicate with each other, that the combustion chamber defining section includes a cylinder block (cylinder block 15sb) and a cylinder head (cylinder head 15sh) having a mating surface (mating surface 15a) which faces the cylinder block, that the gas reserving section is formed in the cylinder head and the cylinder block, part of the gas reserving section formed in the cylinder head having a cylinder head opening (cylinder head opening 150b) which opens to the mating surface, the other part of the gas reserving section formed in the cylinder block having a cylinder block opening (cylinder block opening 150c) which opens to the cylinder head, and that the cylinder head and the cylinder block are coupled with each other to communicate the cylinder head opening and the cylinder block opening.

The gist of a fifth feature of the fourth invention is, in addition to the gist of the second to fourth features of the fourth invention, that the exhaust passage is defined in the cylinder head, and that the gas communicating passage section is defined between the exhaust passage and the mating surface.

The gist of a sixth feature of the fourth invention is, in addition to the gist of the second to fourth features of the fourth invention, that the combustion chamber has a generally circular shape in a plan view, and at least a portion of the gas communicating passage section positioned closer to the exhaust passage is oriented in a preset rotational direction (counterclockwise direction) which parallels a peripheral portion (peripheral portion 40p) of the combustion chamber.

The gist of a seventh feature of the fourth invention is, in addition to the gist of the second to fourth features of the fourth invention, that at least a portion of the gas communicating passage section positioned closer to the exhaust passage extends along the exhaust passage.

The gist of an eighth feature of the fourth invention is, in addition to the gist of the first feature of the fourth invention, that the exhaust passage curves in a plan view of the combustion chamber defining section, and that at least a portion of the gas reserving chamber is positioned in an inside area (area A1) more than the exhaust passage that curves, in the plan view of the combustion chamber defining section.

The gist of a ninth feature of the fourth invention is, in addition to the gist of the first feature of the fourth invention, that the gas reserving chamber is provided on an outer part of the combustion chamber defining section.

The gist of a tenth feature of the fourth invention is, in addition to the gist of the ninth feature of the fourth invention, that the gas reserving chamber projects from the outer part.

The gist of an eleventh feature of the fourth invention is, in addition to the gist of the tenth feature of the fourth invention, that the gas reserving chamber includes a proximal part (proximal part 13a) on the outer part and a cover (cover 131) for closing the proximal part, and that in a space defined by the proximal part, a gas reserving section (gas reserving section 130a) reserving the burned gases is formed.

The gist of a twelfth feature of the fourth invention is, in addition to the gist of the tenth feature of the fourth invention, that in a space defined by the cover, the gas reserving section (gas reserving section 130a) reserving the burned gases is formed.

The gist of a thirteenth feature of the fourth invention is, in addition to the gist of the twelfth feature of the fourth invention, that the gas reserving chamber has a rectangular parallelepiped shape.

According to the features of the present invention, a four stroke engine that can further improve fuel economy and can decrease nitrogen oxides (NOx), without making the structure of the cylinder head part complicated, can be provided.

### Brief Description of the Drawings

FIG. 1 is a schematic structural view of a four stroke internal combustion engine constructed in accordance with a first embodiment of the present invention.
FIG. 2 is a cross sectional view of a cylinder head portion of the four stroke internal combustion engine according to the first embodiment of the present invention.
FIG. 3 is a view seen in direction F3 pointed by the arrow of FIG. 2.
FIG. 4 is an enlarged view showing a part around an exhaust port, including an end portion of a burned gas guiding conduit shown in FIG. 3.
FIG. 5 is a partial, enlarged cross sectional view of the four stroke internal combustion engine according to the first embodiment of the present invention.
FIG. 6 is an enlarged view of a combustion chamber, including a gas reserving chamber and the burned gas guiding conduit according to the first embodiment of the present invention.
FIG. 7 is a graph showing a time of inflow of burned gases to the gas reserving chamber according to the first embodiment of the present invention and a time of discharge of the burned gases (EGR gases) from the gas reserving chamber.
FIG. 8 is a graph showing a relationship between the capacity of the gas reserving chamber according to the first embodiment of the present invention and the nitrogen oxides (NOx).
FIG. 9 is a graph showing a relationship between the capacity of the gas reserving chamber according to the first embodiment of the present invention and the rate of fuel consumption.
FIG. 10 is a graph showing a relationship between the capacity of the gas reserving chamber according to the first embodiment of the present invention and the opening degree of a throttle (throttle valve).
FIG. 11 is a graph showing a relationship between the capacity of the gas reserving chamber according to the first embodiment of the present invention and the hydrocarbon gas (HC).
FIG. 12 is a schematic structural view of a four stroke internal combustion engine constructed in accordance with a second embodiment of the present invention.
FIG. 13 is a graph for describing introduction times of exhaust gases and fresh air in the second embodiment of the present invention.
FIG. 14 is a graph for describing fuel consumption improvement effects in the respective embodiments according to the present invention.
FIG. 15 is an illustration showing an alternative of the second embodiment of the present invention.
FIG. 16 is an illustration showing another alternative of the second embodiment of the present invention.
FIG. 17 is a partial, enlarged cross sectional view of a four stroke internal combustion engine constructed in accordance with a third embodiment of the present invention.
FIG. 18 is a schematic perspective view of a portion of a four stroke internal combustion engine constructed in accordance with a fourth embodiment of the present invention.
FIG. 19 is a bottom view of a cylinder head seen in direction F19 indicated in FIG. 18.
FIG. 20 is a partial, enlarged cross sectional view of a four stroke internal combustion engine constructed in accordance with an alternative of the third embodiment of the present invention.
FIG. 21 is a partial, enlarged cross sectional view of a four stroke internal combustion engine constructed in accordance with another alternative of the third embodiment of the present invention.

### Best Mode for Carrying Out the Invention

### [First Embodiment]

Next, with reference to drawings, a first embodiment of a four stroke internal combustion engine constructed in accordance with the present invention will be described. Additionally, in the following descriptions of the drawings, the same or similar portions are assigned with the same or similar reference symbols. It should be noted that the drawings are schematic and the proportions of the dimensions and so on differ from those in reality.

Hence, specific dimensions and the like should be determined in consideration of the following descriptions. Furthermore, as a matter of course, different drawings include elements which have different dimensional relations and ratios.

### (Outline of Structure of Four Stroke Engine)

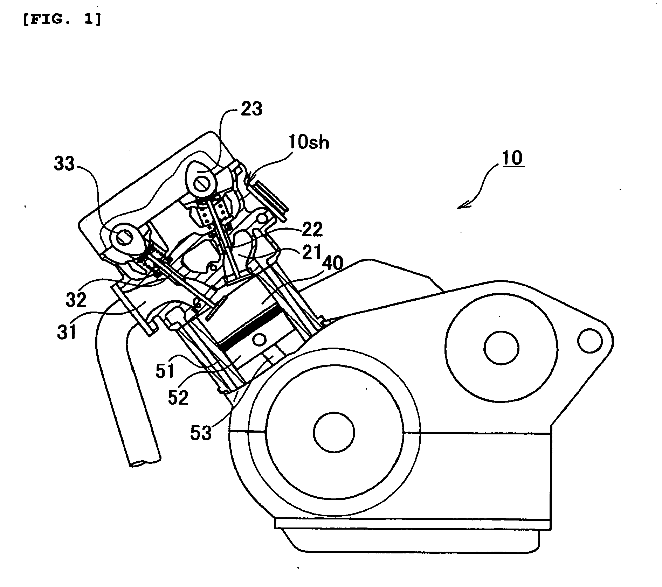

FIG. 1 shows an outline of a structure of an engine 10 which is a four stroke internal combustion engine constructed in accordance with this embodiment. Specifically, FIG. 1 is a side elevational view of the engine 10 with a portion of a cylinder head 10sh depicted in cross section.

As shown in FIG. 1, the engine 10 includes an intake port 21 and an exhaust port 31. The intake port 21 defines a portion of an intake passage in the cylinder head and opens to a combustion chamber 40. The exhaust port 31 defines a portion of an exhaust passage in the cylinder head and opens to the combustion chamber.

The intake port 21 has an intake valve 22. The exhaust port 31 has an exhaust valve 32.

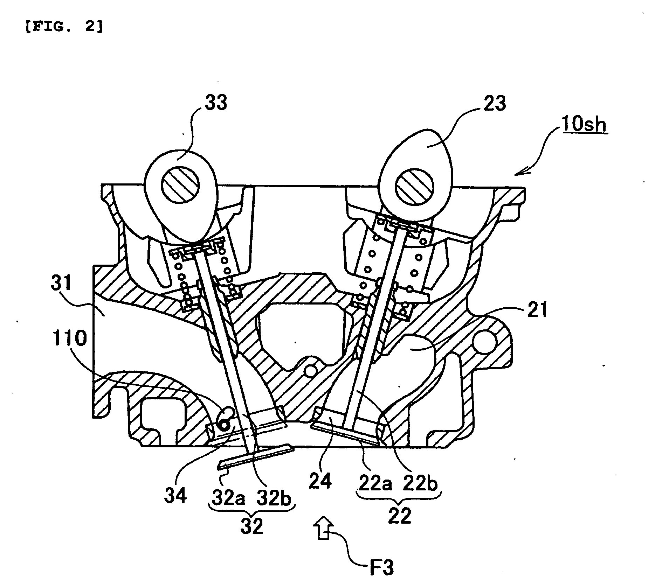

An intake camshaft 23 disposed at a top portion of the cylinder head 10sh reciprocally moves the intake valve 22 at preset time intervals. The intake valve 22, when moved reciprocally by the intake camshaft 23, opens or closes a combustion chamber side opening (portion corresponding to a valve seat 24 of FIG. 2) of the intake port 21.

Similarly, an exhaust camshaft 33 disposed at a top portion of the cylinder head 10sh reciprocally moves the exhaust valve 32 at preset time intervals. The exhaust valve 32, when moved reciprocally by the exhaust camshaft 33, opens or closes a combustion chamber side opening (portion corresponding to a valve seat 34 of FIG. 2) of the exhaust port 31.

A cylinder 51 is formed below the cylinder head 10sh. A piston 52 for rotating a crankshaft (not shown) through a connecting rod 53 is disposed in the cylinder 51.

### (Structure of Cylinder Head Portion)

Next, with reference to FIGs. 2-4, a specific structure of the cylinder head 10sh portion will be described.

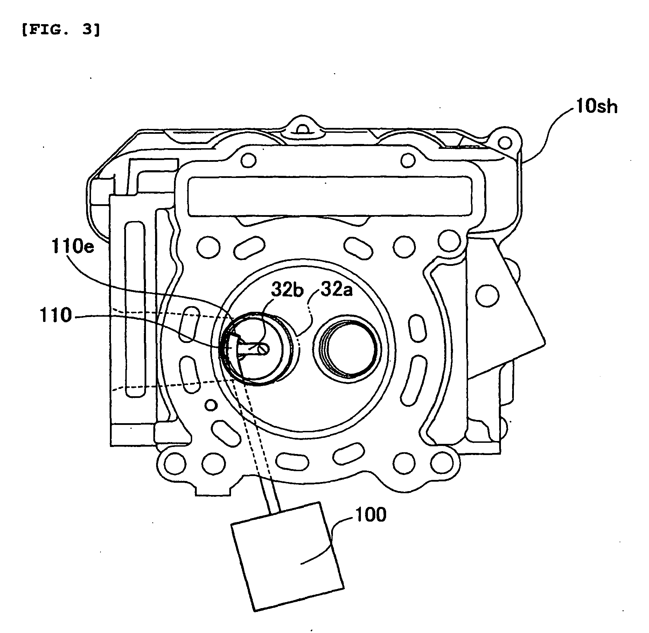

FIG. 2 is a cross sectional view of the cylinder head 10sh portion. Specifically, FIG. 2 shows a cross sectional view of the cylinder head 10sh portion taken along a line extending normal to the intake camshaft 23 and the exhaust camshaft 33. Also, FIG. 3 is a view seen in direction F3 pointed by the arrow of FIG. 2.

As shown in FIGs. 2 and 3, the intake valve 22 is formed with a valve head 22a opening or closing an opening of the intake port 21 next to a combustion chamber 40 (see FIG. 1), specifically a portion of a valve seat 24, and a stem 22b extending from the valve head 22a.

Similarly, the exhaust valve 32 is formed with a valve head 32a opening or closing an opening of the exhaust port 31 next to the combustion chamber 40 (see FIG. 1), specifically a portion of a valve seat 34, and a stem 32b extending from the valve head 32a.

Also, the exhaust port 31 has a burned gas guiding conduit (gas communicating passage) 110 through which a portion of the exhaust port 31 neighboring the valve head 32a communicates with a gas reserving chamber 100. Specifically, an end portion 110e of the burned gas guiding conduit 110 is positioned at more downstream than the valve head 32a in the exhaust port 31 to approach the valve head 32a while keeping a proper distance thereto so that the end of the conduit 110 does not interfere with the valve head 32a when the valve head 32a closes the opening of the exhaust port 31.

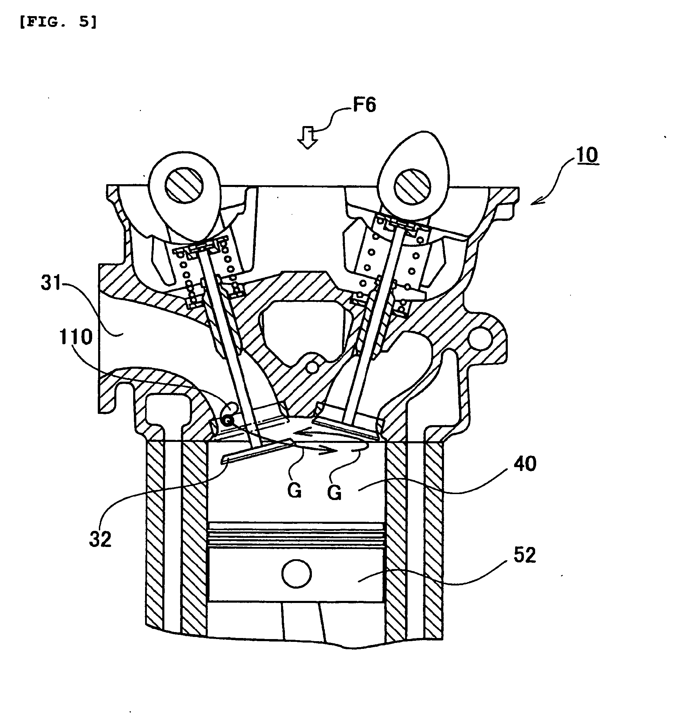

In a lateral side portion of the cylinder head 10sh, a gas reserving chamber 100 is provided to communicate with the exhaust port 31 and reserve burned gases G (see FIG. 5) discharged from the combustion chamber 40.

The burned gases G flow into the gas reserving chamber 100 while the exhaust valve 32 opens in the expansion stroke or the exhaust stroke of the engine 10. Also, the burned gases G (EGR gases) reserved in the gas reserving chamber 100 are discharged to the combustion chamber 40 while the exhaust valve 32 opens in the intake stroke of the engine 10.

Additionally, more specific times for the burned gases G (EGR gases) to flow into the gas reserving chamber 100 and times for the burned gases G (EGR gases) to be discharged from the gas reserving chamber 100 will be described later.

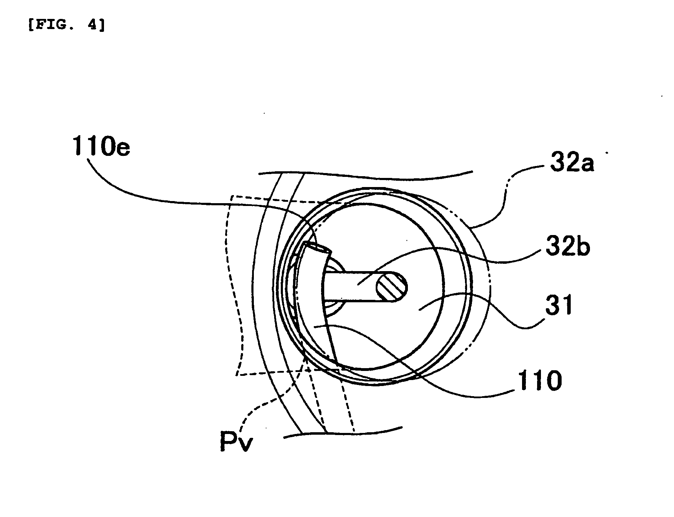

FIG. 4 is an enlarged view showing a part around the exhaust port 31, including the end portion 110e of the burned gas guiding conduit 110.

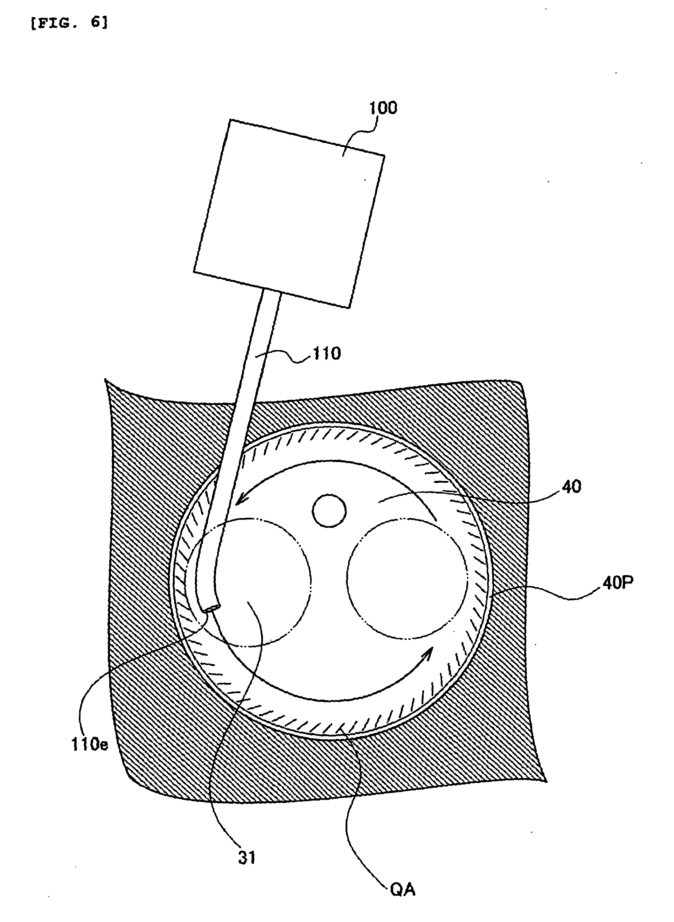

As shown in FIG. 4, the end portion 110e of the burned gas guiding conduit 110 has a slightly curving configuration. Specifically, the end portion 110e is oriented in a direction which parallels a peripheral portion 40p (see FIG. 6) of the combustion chamber 40.

### (Inflow/Discharge Operations of Burned Gases)

Next, with reference to FIGs. 5-7, operations regarding the inflow of the burned gases G into the gas reserving chamber 100 provided in the engine 10 and the discharge of the burned gases G (EGR gases) from the gas reserving chamber 100 will be described.

FIG. 5 is a partial, enlarged cross sectional view of the engine 10. The burned gases G reserved in the gas reserving chamber 100 is discharged to the combustion chamber 40 while the exhaust valve 32 opens in the intake stroke of the engine 10.

FIG. 6 is an enlarged view of the combustion chamber 40, including the gas reserving chamber 100 and the burned gas guiding conduit 110. Specifically, FIG. 6 is a view in which the combustion chamber 40, together with the gas reserving chamber 100 and the burned gas guiding conduit 110, is seen in direction F6 of FIG. 5.

As shown in FIG. 6, the end portion 110e of the burned gas guiding conduit 110 positioned in the exhaust port 31 has the slightly curving configuration. Specifically, the end portion 110e is oriented in the direction that parallels the peripheral portion 40p of the combustion chamber 40.

Also, in this embodiment, the end portion 110e is oriented in a direction which parallels a top surface of the piston 52, i.e., in a generally horizontal direction.

Because the end portion 110e is oriented in the direction that parallels the peripheral portion 40p of the combustion chamber 40, the burned gases G (EGR gases) reserved in the gas reserving chamber 100 can be discharged to the peripheral portion 40p in a swirl configuration.

Therefore, unburned gases in a flame disappearing area (area in which flame disappears due to being cooled when the flame diffuses) which is mainly made in the peripheral portion 40p, i.e., in the so-called quenching area QA, decrease, and a discharge amount of hydrocarbon gas (HC) can be reduced.

More specifically, when the burned gases G (EGR gases) are discharged to the peripheral portion 40p in a swirl configuration, the unburned gases in the quenching area QA is vaporized by the high-temperature burned gases G (EGR gases). After vaporization of the unburned gases, the quenching area QA is filled with the burned gases G (EGR gases) to prevent unburned gases from flowing into the quenching area QA.

Therefore, unburned gases in the quenching area QA decrease and the discharge amount of the hydrocarbon gas (HC) can be reduced.

In this embodiment, an inner diameter of the burned gas guiding conduit 110 is set to be 2.2-2.5mm. Additionally, the inner diameter and a conduit length of the burned gas guiding conduit 110 and a capacity of the gas reserving chamber 100 are preferably changed in accordance with the displacement of the engine 10 or the like.

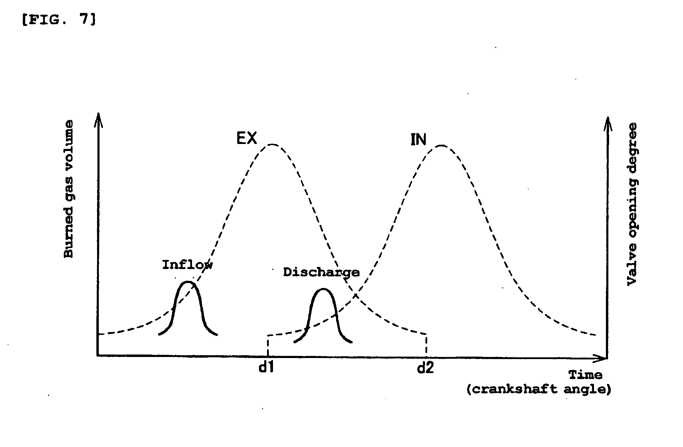

FIG. 7 shows a time of the inflow of the burned gases G to the gas reserving chamber 100 and a time of the discharge of the burned gases G (EGR gases) from the gas reserving chamber 100. In FIG. 7, the dotted line "EX" indicates opening degrees of the exhaust valve 32 corresponding to crankshaft angles. The dotted line "IN" indicates opening degrees of the intake valve 22 corresponding to the crankshaft angles.

The solid line "inflow" indicates an amount and a time of the inflow of the burned gases G flowing into the gas reserving chamber 100. The solid line "discharge" indicates an amount and a time of the discharge of the burned gases G (EGR gases) discharged from the gas reserving chamber 100.

As shown in FIG. 7, the burned gases G flow into the gas reserving chamber 100 in the expansion stroke of the engine 10, i.e., at the time that the exhaust valve 32 opens while the piston 52 is pushed down toward the crankshaft (not shown) by the expansion of the burning gases.

Also, the burned gases G reserved in the gas reserving chamber 100 is discharged in the intake stroke of the engine 10, i.e., at the time that the exhaust valve 32 opens while the air/fuel mixture flows into the combustion chamber 40 from the intake port 21.

More specifically, as shown in FIG. 7, the time at which the burned gases G (EGR gases) are discharged to the combustion chamber 40 is set to be adjacent to the time at which the exhaust valve 32 closes.

### (Action and Effect)

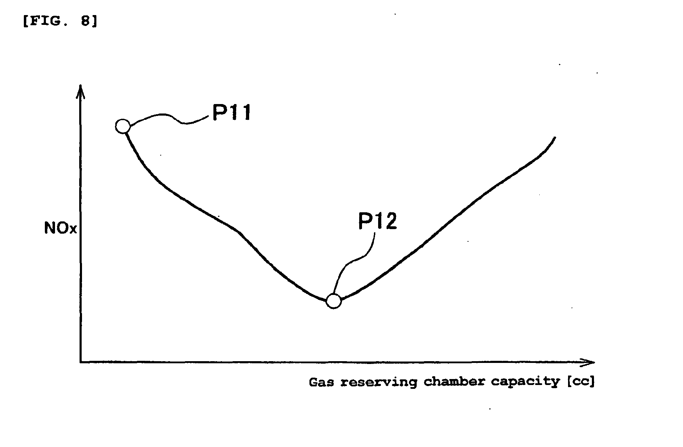

Next, with reference to data shown in FIGs. 8-11, actions and effects of the engine 10 having the gas reserving chamber 100 and the burned gas guiding conduit 110 described above will be described. Additionally, the data shown in FIGs. 8-11 are measured under the following conditions.

### Engine displacement: approximately 125cc

### Engine speed at Measurement time: 3,000 rpm (0.6 kw output)

FIG. 8 is a graph showing a relationship between the capacity of the gas reserving chamber 100 and the nitrogen oxides (NOx). As shown in FIG. 8, the nitrogen oxides NOx under the condition that the capacity of the gas reserving chamber 100 is approximately 65cc (P12 in the graph) decreases approximately 15% in comparison with the nitrogen oxides under the condition that the capacity of the gas reserving chamber 100 is extremely small (P11 in the graph, approximately 0cc) .

As thus described, because the engine 10 has the gas reserving chamber 100 communicating with the exhaust port 31 and reserving the burned gases G discharged from the combustion chamber 40, no special intake and exhaust passages communicating with the gas reserving chamber 100 and valves are necessary.

That is, according to the engine 10 having the gas reserving chamber 100 and the burned gas guiding conduit 110, a four stroke internal combustion engine that can reduce nitrogen oxides (NOx) without making the structure of the cylinder head 10sh portion complicated can be provided.

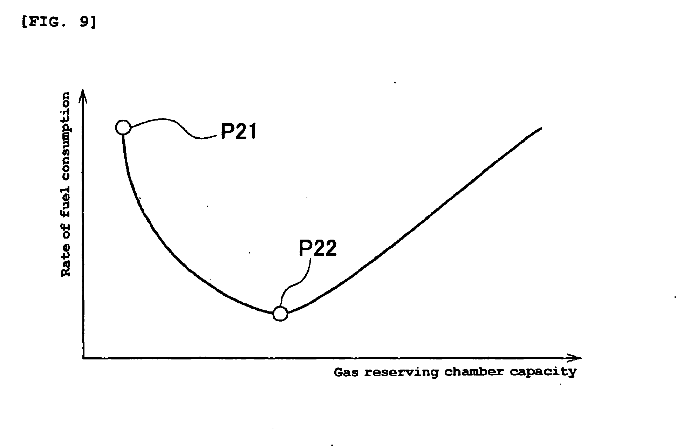

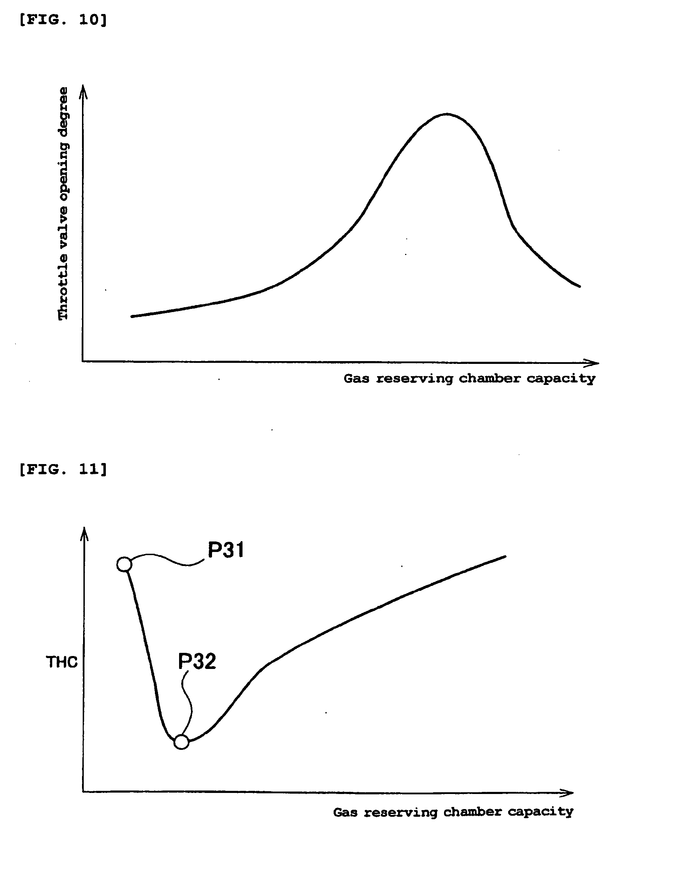

FIG. 9 is a graph showing a relationship between the capacity of the gas reserving chamber 100 and the rate of fuel consumption. As shown in FIG. 9, the rate of fuel consumption under the condition that the capacity of the gas reserving chamber 100 is approximately 45cc (P22 in the graph) is improved approximately 10% in comparison with the rate thereof under the condition that the capacity of the gas reserving chamber 100 is extremely small (P21 in the graph, approximately 0cc). FIG. 10 is a graph showing a relationship between the capacity of the gas reserving chamber 100 and the opening degree of the throttle (throttle valve).

In the engine 10 having the gas reserving chamber 100 and the burned gas guiding conduit 110, an internal EGR amount can be larger than before by discharging (returning) the burned gases G (EGR gases) to the combustion chamber 40 in the intake stroke. Further, the pumping loss of the engine 10 decreases. Therefore, the throttle valve of the engine 10 can be set at a position on the open side. The rate of fuel consumption can be improved, accordingly.

Further, in the engine 10 having the gas reserving chamber 100 and the burned gas guiding conduit 110, the swirl can be made in the combustion chamber 40. The combustion efficiency thus can be further improved.

FIG. 11 is a graph showing a relationship between the capacity of the gas reserving chamber 100 and the hydrocarbon, gas (HC). As shown in FIG. 11, the hydrocarbon gas under the condition that the capacity of the gas reserving chamber 100 is approximately 30cc (P32 in the graph) decreases approximately 7% in comparison with the hydrocarbon gas under the condition that the capacity of the gas reserving chamber 100 is extremely small (P31 in the graph, approximately 0cc).

Although much hydrocarbon HC is generated in the quenching area QA, the burned gases G (EGR gases) reserved in the gas reserving chamber 100 can be discharged to the peripheral portion 40p in a swirl configuration because the end portion 110e of the burned gas guiding conduit 110 is oriented in the direction that parallels the peripheral portion 40p of the combustion chamber 40. That is, in the engine 10, the generated amount of hydrocarbon HC can be reduced because the unburned gases in the quenching area QA are decreased by the EGR gases. In addition, because, in the engine 10, the EGR gases are discharged (returned) to the combustion chamber 40 in a swirl configuration, the EGR gases positioned in the vicinity of the peripheral portion 40p and fresh air/fuel mixture flowing into from the intake port 21 can together stratify.

That is, the EGR rate (a numerical value given by dividing an amount of EGR gases returned to the combustion chamber 40 by an amount of the intake air) can be improved. Further improvement in the fuel consumption rate and purification of the exhaust gases can be expected.

Also, as described above, the inner diameter and the conduit length of the burned gas guiding conduit 110 and the capacity of the gas reserving chamber 100 are adjustable in accordance with the displacement of the engine 10 or the like. Therefore, the time for discharging the burned gases G (EGR gases) to the combustion chamber 40 can be set in a proper engine speed range in accordance with characteristics of the engine 10 or the like.

### (Alternatives)

Although contents of the present invention are disclosed through the first embodiment of the present invention as described above, it should not be understood that the descriptions and drawings which are portions of the disclosure limit the present invention. The disclosure may provide the skilled persons in the art with various alternatives.

For example, in the first embodiment of the present invention described above, the burned gases G flow into the gas reserving chamber 100 at the time that the exhaust valve 32 opens in the expansion stroke of the engine 10 and the burned gases G (EGR gases) are discharged to the combustion chamber 40 at the time that the exhaust valve 32 opens in the intake stroke of the engine 10. However, the times for the inflow and the discharge of the burned gases G are not necessarily limited to those times.

Furthermore, the embodiment of the present invention described above employs the structure in which the end portion 110e of the burned gas guiding conduit 110 is positioned in the vicinity of the valve head 32a. The burned gas guiding conduit 110, however, is not always required. In this alternative, the burned gas guiding conduit 110 may terminate at, for example, location PV indicated in FIG. 4, i.e., at an inner wall surface of the exhaust port 31.

### [Second Embodiment]

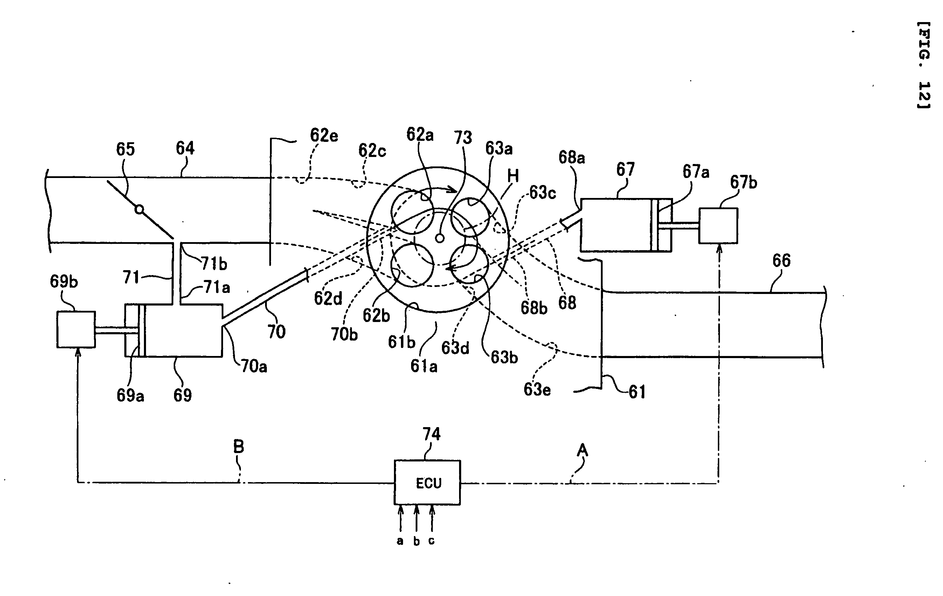

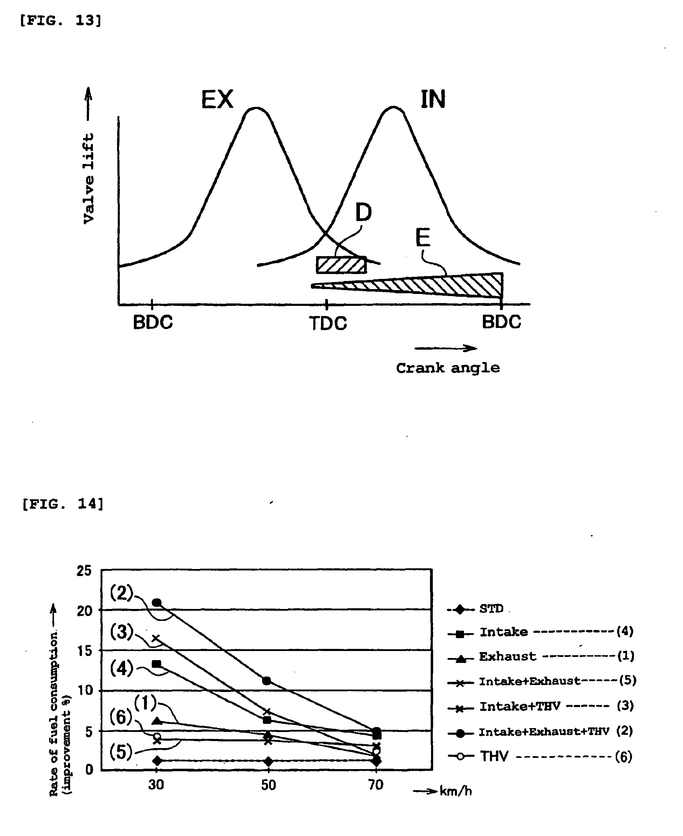

FIGs. 12 and 13 are illustrations for describing a second embodiment of the present invention. The second embodiment is an example in which a fresh air reserving chamber 69 is provided in addition to the gas reserving chamber 67 that is the same one used in the first embodiment. Additionally, the term fresh air means not only air but also mixture containing both air and fuel.

An engine in the second embodiment is a four stroke, single cylinder, four valve engine having two intake valves and two exhaust valves per cylinder. The engine generally has a structure in which a cylinder block, a cylinder head and a head cover are layered on a top wall of a crankcase and are fixed thereto.

A combustion hollow section 61b defining a ceiling wall of a combustion chamber is provided in a cylinder block side mating surface 61a of the cylinder head 61. The combustion hollow section 61b has two intake port openings 62a, 62b and two exhaust port openings 63a, 63b. These intake port openings and exhaust port openings are opened or closed by intake valves and exhaust valves, respectively. An ignition plug 73 is positioned at a generally center part of the combustion hollow section 61b.

Branched intake ports 62c, 62d defining a part of a cylinder head inner portion of an intake passage are connected to the respective intake port openings 62a, 62b. These two branched intake ports 62c, 62d are branched from a single and common main intake port 62e which also defines another part of the cylinder head inner portion of the intake passage. An intake conduit 64 defining a cylinder head outer portion of the intake passage is connected to an outside coupling opening of the main intake port 62e. The intake conduit 64 has a throttle valve 65 which controls an intake passage area.

Branched exhaust ports 63c, 63d defining a part of a cylinder head inner portion of an exhaust passage are connected to the respective exhaust port openings 63a, 63b. These two branched intake ports 63c, 63d are branched from a single and common main exhaust port 63e which also defines another part of the cylinder head inner portion of the exhaust passage. An exhaust conduit 66 defining a cylinder head outer portion of the exhaust passage is connected to an outside coupling opening of the main exhaust port 63e.

A sealed box shaped gas reserving chamber 67, which is the same as the gas reserving chamber 100 in the first embodiment, is externally disposed on the exhaust port side of the cylinder head 61. One end 68a of a burned gas guiding passage (gas communicating passage) 68 is connected to the gas reserving chamber 67 to communicate with the inside of the gas reserving chamber. Another end 68b of the gas communicating passage 68 is connected to a portion of one branched exhaust port 63d located downstream and in the vicinity of the.exhaust port opening 63b to communicate therewith.

In this regard, the other end 68b of the gas communicating passage 68 is formed to open in the combustion chamber through the exhaust port opening 63b and to be oriented in a tangential direction relative to an inner circumference of the combustion chamber. That is, both an axial direction and a position of the gas communicating passage 68 are set in such a manner that the exhaust gases reserved in the gas reserving chamber 67 is introduced into the combustion chamber while making swirling flow (lateral whirl) along the inner circumference of the combustion chamber.

A piston 67a is reciprocally disposed in the gas reserving chamber 67. An actuator 67b reciprocally drives the piston 67a. Thereby, a capacity of the gas reserving chamber 67 is freely changeable.

A sealed box shaped fresh air reserving chamber 69, which is similar to the gas reserving chamber 67, is externally disposed on the intake port side of the cylinder head 61. One end 70a of a first fresh air communicating passage 70 is connected to the fresh air reserving chamber 69 to communicate with the inside of the fresh air reserving chamber. Another end 70b of the fresh air communicating passage 70 is connected to a portion of one branched intake port 62c located upstream and in the vicinity of the intake port opening 62a to communicate therewith.

The other end 70b of the first fresh air communicating passage 70 is formed to open in the combustion chamber through the intake port opening 62a and to be oriented in a tangential direction relative to a concentric circle H defined closer to the center of the combustion chamber. That is, both an axial direction and a position of the first fresh air communicating passage 70 are set in such a manner that the fresh air reserved in the fresh air reserving chamber 69 is introduced into the combustion chamber while making swirling flow (lateral whirl) circulating closer to the center of the combustion chamber.

In this regard, the swirling flow of the exhaust gases discharged from the gas reserving chamber 67 is formed closer to the outer circumference of the combustion chamber. The swirling flow of the fresh air discharged from the fresh air reserving chamber 69 is formed closer to the ignition plug 73. These two swirling flows stratify together to realize the so-called stratified charge combustion.

One end 71a of a second fresh air communicating passage 71 is connected to the fresh air reserving chamber 69 to communicate with the inside thereof. Another end 71b of the second fresh air communicating passage 71 communicates with a portion of the intake conduit 64 located downstream and in the close vicinity of the throttle valve 65 which is placed at an idling position.

Furthermore, a piston 69a is reciprocally disposed in the fresh air reserving chamber 69. An actuator 69b reciprocally drives the piston 69a. Thereby, a capacity of the fresh air reserving chamber 69 is freely changeable.

The actuators 67b, 69b respectively receive inputs, a gas reserving chamber capacity control signal A and a fresh air reserving chamber capacity control signal B from an ECU 74. Signals indicating engine operational conditions such as an engine speed "a, " a throttle opening "b," an engine temperature "c" are inputted into the ECU. The ECU 74 calculates both an optimum gas reserving chamber capacity and an optimum fresh air reserving chamber capacity based upon those input signals and outputs the control signals A, B for realizing the capacities to the respective actuators 67b, 69b.

In the second embodiment, the gas reserving chamber 67 communicates with the portion of the branched exhaust port 63d located downstream and in the vicinity of the exhaust port opening 63b through the gas communicating passage 68. Therefore, when the exhaust valve opens the exhaust port opening 63b almost at the end of the expansion stroke, a high blow-down pressure made by the exhaust gases acts on the gas communicating passage 68 so that the exhaust gases flow into the gas reserving chamber 67 and are reserved in the gas reserving chamber 67 under positive pressure. Then, the piston starts to go down before the exhaust valve closes the exhaust port opening 63b in the intake stroke. When the combustion chamber is negatively pressurized, as indicated by symbol D in FIG. 13, the exhaust gases reserved in the gas reserving chamber 67 are discharged to the combustion chamber through the exhaust port opening 63b.

The gas communicating passage 68 is arranged in such a manner that the axis thereof extends through the exhaust port opening 63b and generally makes a tangent relative to the inner circumference of the combustion chamber. The exhaust gases coming from the gas reserving chamber 67 thus is discharged in the tangential direction in the peripheral portion of the combustion chamber. The swirling flow of the exhaust gases is formed closer to the peripheral portion of the combustion chamber, accordingly.

The fresh air reserving chamber 69 is negatively pressurized in the previous intake stroke. Also, the fresh air reserving chamber 69 communicates with the portion of the intake passage located in the vicinity of the intake port opening, and in the downstream vicinity of the throttle valve, through the first and second fresh air communicating passages 70, 71. Therefore, when the intake valve closes the intake port opening at the end of the intake stroke, the fresh air is reserved in the fresh air reserving chamber 69.

When the piston goes down and the intake valve opens the intake port opening 62a in the next intake stroke, the fresh air reserved in the fresh air reserving chamber 69 is introduced into the combustion chamber from the intake port opening 62a through the first fresh air communicating passage 70. On this occasion, because the fresh air reserving chamber 69 communicates with the portion of the intake passage located downstream the throttle valve and in the close vicinity thereof through the second fresh air communicating passage 71, the fresh air is continuously introduced through the second fresh air communicating passage 71, the fresh air reserving chamber 69 and the first fresh air communicating passage 70 until almost the end of the intake stroke. In addition, the closer the intake stroke approaches to the end thereof, the more the fresh air is introduced into the combustion chamber (see reference symbol E of FIG. 13).

The first fresh air communicating passage 70 is arranged in such a manner that the axis thereof extends through the intake port opening 62a and generally makes a tangent relative to the concentric circle H formed closer to the ignition plug 73 of the combustion chamber. The fresh air coming from the fresh air reserving chamber 69 thus is introduced in the tangential direction that is closer to the center of the combustion chamber. The swirling flow of the fresh air is formed closer to the center of the combustion chamber, accordingly.

As thus described, the swirling flow by the exhaust gases is made closer to the outer circumference of the combustion chamber, while the swirling flow by the fresh air is made closer to the ignition plug 73. The outer and inner double swirling flows realize the stratified charge. Thus, the reduction of the pumping loss and further the improvement of the fuel consumption by introducing the exhaust gases can be resulted, and, simultaneously, the improvement of the combustion performance and further the improvement of the exhaust gas property by the fresh air swirling flow can be resulted.

Additionally, in the first embodiment, (1) the example in which only the gas reserving chamber 100 is provided was described. In the second embodiment, (2) the arrangement in which both of the gas reserving chamber 67 and the fresh air reserving chamber 69 are provided, and the fresh air reserving chamber 69 communicates with the location downstream the throttle valve was described. In the present invention, however, further different embodiments can be applied as follows:

(3) Only the fresh air reserving chamber 69 is provided, and the fresh air reserving chamber 69 and the intake passage communicate with each other through the first and second fresh air communicating passages 70, 71.

(4) Only the fresh air reserving chamber 69 is provided, and the fresh air reserving chamber 69 and the intake passage communicate with each other through the first fresh air communicating passage 70. No second fresh air communicating passage 71 is provided.

(5) Both of the gas reserving chamber 67 and the fresh air reserving chamber 69 are provided. In this arrangement, however, the fresh air reserving chamber 69 and the intake passage communicate with each other through only the first fresh air communicating passage 70.

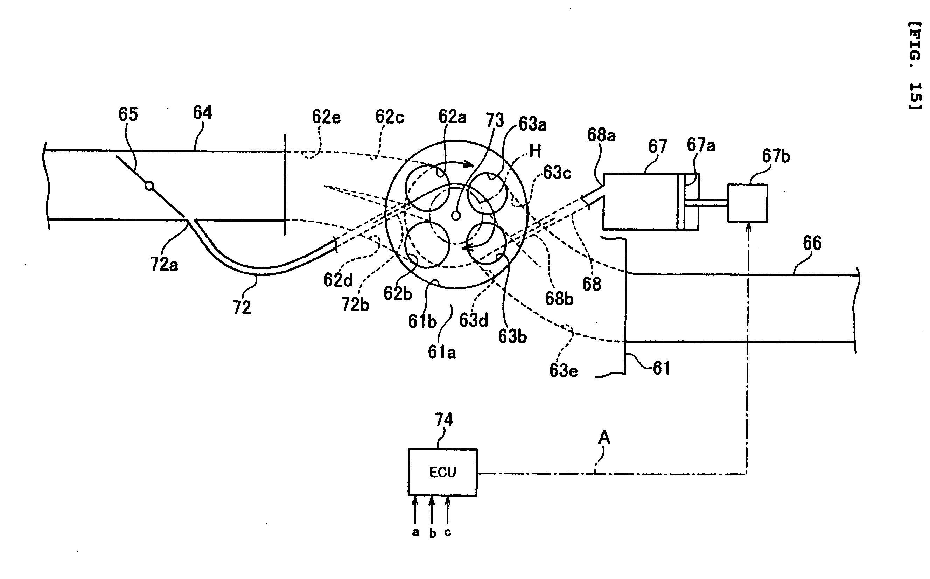

(6) As shown in FIG. 15, the gas reserving chamber 67 is provided on the exhaust side. On the other hand, no fresh air reserving chamber 69 is provided on the intake side, and the portion of the intake passage located downstream the throttle valve and in the vicinity thereof and the portion of the intake passage located in the vicinity of the intake port opening communicate with each other directly through a third fresh air communicating passage 72. An upstream end 72a of the third fresh air communicating passage 72 is connected to a portion located downstream of the throttle valve and in the vicinity thereof, and a downstream end 72b is connected to a portion located in the vicinity of the intake port opening. Further, an axial direction of the downstream end 72b portion and a position thereof are set in such a manner that the fresh air swirling flow is made closer to the center of the combustion chamber. More specifically, the downstream end 72b is oriented in the tangential direction relative to the inner circumference of the combustion chamber.

### (Action and Effect)

FIG. 14 shows experimental results for describing fuel consumption improvement effects in the cases of (1) through (6). In this experiment, improvement effects of fuel consumption rates have been investigated in cases that a motorcycle whose engine displacement is 125cc, gas reserving chamber capacity is 30cc and fresh air reserving chamber capacity is 30cc runs at 30, 50 and 70 km/h, relative to a compared example vehicle having neither the gas reserving chamber nor the fresh air reserving chamber. Additionally, as to the case of (6), an experimental result of the situation in which the motorcycle runs only at 30 km/h is indicated.

It is apparent from FIG. 14 that the fuel consumption rates in all of the cases (1) through (6) are improved more than that of the compared example vehicle. Particularly, in the cases (4), (3) and (2), the fuel consumption rates at 30 km/h are extremely improved to be 13%, 16% and 21%, respectively, in comparison with that of the compared example vehicle.

### (Another Alternative)

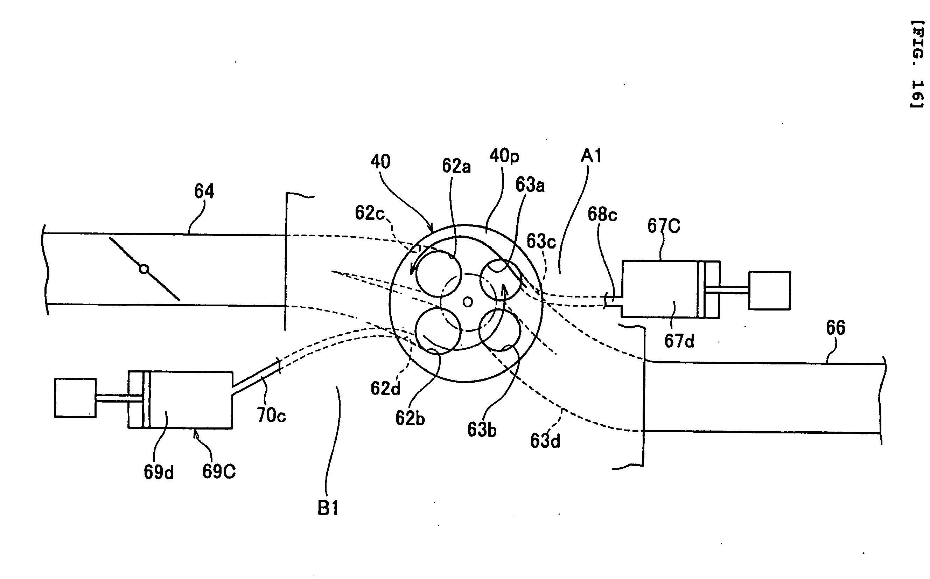

In the following descriptions, with reference to FIG. 16, another alternative of the second embodiment described above will be described. FIG. 16 is a schematic structural view of a four stroke internal combustion engine constructed in accordance with the another alternative of the second embodiment of the present invention.

As shown in FIG. 16, the four stroke internal combustion engine has a combustion chamber 40 which is generally circularly shaped in a plan view, an intake conduit 64 through which fresh air introduced into the combustion chamber 40 flows, and an exhaust conduit 66 through which exhaust gases discharged from the combustion chamber 40 flows. Also, the intake conduit 64 has a branched intake port 62c and a branched intake port 62d both opening to the combustion chamber 40. The exhaust conduit 66 has a branched exhaust port 63c and a branched exhaust port 63d both opening to the combustion chamber 40.

The four stroke internal combustion engine also has a gas reserving chamber 67C and a fresh air reserving chamber 69C. The gas reserving chamber 67C includes a gas reserving section 67d reserving burned gases and a gas communicating passage 68c through which the gas reserving section 67d and the exhaust conduit 66 (branched exhaust port 63c) communicate with each other. The fresh air reserving chamber 69C includes a fresh air reserving section 69d reserving fresh air and a fresh air communicating passage 70c through which the fresh air reserving section 69d and the intake conduit 64 (branched intake port 62d) communicate with each other. The burned gases in the combustion chamber 40 flow into the gas reserving section 67d of the gas reserving chamber 67C while the exhaust valve opens in the expansion stroke or the exhaust stroke. On the other hand, the burned gases reserved in the gas reserving section 67d of the gas reserving chamber 67C are discharged to the combustion chamber 40 while the exhaust valve opens in the intake stroke.

The fresh air reserved in the fresh air reserving section 69d of the fresh air reserving chamber 69C is introduced into the combustion chamber 40 while the intake valve opens in the intake stroke.

At least a portion of the gas communicating passage 68c positioned closer to the exhaust conduit 66 (branched exhaust port 63c) is oriented in a preset rotational direction (counterclockwise direction) which parallels a peripheral portion 40p of the combustion chamber 40. Also, the portion of the gas communicating passage 68c positioned closer to the exhaust conduit 66 (branched exhaust port 63c) extends along the exhaust conduit 66 (branched exhaust port 63c).

At least a portion of the fresh air communicating passage 70c positioned closer to the intake conduit 64 (branched intake port 62d) is oriented in a preset rotational direction (counterclockwise direction) which parallels a concentric circle H formed closer to the center of the combustion chamber 40. Also, the portion of the fresh air communicating passage 70c positioned closer to the intake conduit 64 (branched intake port 62d) extends along the intake conduit 64 (branched intake port 62d).

Additionally, the direction of the portion of the fresh air communicating passage 70c positioned closer to the intake conduit 64 (branched intake port 62d) is only required to be the same as the direction of the portion of the gas communicating passage 68c positioned closer to the exhaust conduit 66 (branched exhaust port 63c). For example, it is of course applicable that both of the directions are clockwise directions.

The exhaust conduit 66 curves in a plan view of the combustion chamber defining section (cylinder block and cylinder head). At least the portion of the gas reserving chamber 67C is placed in an area (area A1) positioned inside more than the exhaust conduit 66 that curves in the plan view of the combustion chamber defining section.

The intake conduit 64 curves in the plan view of the combustion chamber defining section (cylinder block and cylinder head). At least the portion of the fresh air reserving chamber 69C is placed in an area (area B1) positioned inside more than the intake conduit 64 that curves in the plan view of the combustion chamber defining section.

### (Action and Effect)

According to the four stroke internal combustion engine in this alternative, because at least the portion of the gas communicating passage 68c positioned closer to the exhaust conduit 66 (branched exhaust port 63c) is oriented in the preset rotational direction (counterclockwise direction) that parallels the peripheral portion 40p of the combustion chamber 40, the burned gases discharged from the gas reserving chamber 67C to the combustion chamber 40 can make swirling flow that parallels the peripheral portion 40p of the combustion chamber 40.

Also, because at least the portion of the gas communicating passage 68c positioned closer to the exhaust conduit 66 (branched exhaust port 63c) extends along the branched exhaust port 63c, the burned gases are discharged to the combustion chamber 40 from the gas reserving chamber 67C without being blocked by the inner wall of the branched exhaust port 63c. Accordingly, the swirling flow that parallels the peripheral portion 40p of the combustion chamber 40 can be efficiently generated.

Further, according to the four stroke internal combustion engine in this alternative, because at least the portion of the fresh air communicating passage 70c positioned closer to the intake conduit 64 (branched intake port 62d) is oriented in the preset rotational direction (counterclockwise direction) which parallels the concentric circle H formed closer to the center of the combustion chamber 40, the fresh air introduced into the combustion chamber 40 from the fresh air reserving chamber 69C can make swirling flow that parallels the concentric circle H formed closer to the center of the combustion chamber 40.

Also, because at least the portion of the fresh air communicating passage 70c positioned closer to the intake conduit 64 (branched intake port 62d) extends along the branched intake port 62d, the fresh air is introduced into the combustion chamber 40 from the fresh air reserving chamber 69C without being blocked by the inner wall of the branched intake port 62d. Accordingly, the swirling flow that parallels the concentric circle H formed closer to the center of the combustion chamber 40 can be efficiently generated.

Further, because the direction of the portion of the fresh air communicating passage 70c positioned closer to the branched intake port 62d is the same as the direction of the portion of the gas communicating passage 68c positioned closer to the branched exhaust port 63c, the swirling flow that parallels the concentric circle H and the peripheral portion 40p can be efficiently generated.

### [Third Embodiment]

In the following descriptions, with reference to drawings, a third embodiment of the present invention will be described. Also, in the following descriptions, different points between the embodiments described above and the third embodiment will be mainly described.

Specifically, in the embodiments described above, the gas reserving chamber reserving burned gases is disposed out of the combustion chamber defining section (cylinder block and cylinder head) that forms the defining section.

To the contrary, in the third embodiment, the gas reserving chamber reserving burned gases is disposed in the combustion chamber defining section (cylinder block and cylinder head) that forms the defining section.

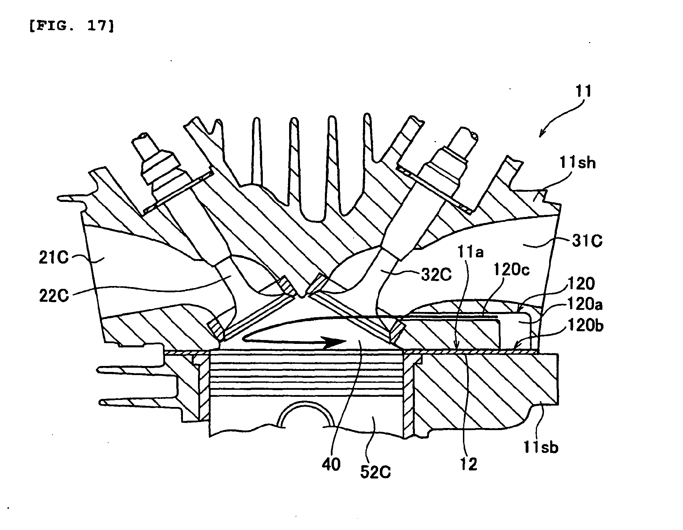

FIG. 17 is a schematic structural view showing a four stroke internal combustion engine constructed in accordance with the third embodiment of the present invention.

As shown in FIG. 17, the four stroke internal combustion engine (engine 11) includes a combustion chamber 40, a cylinder block 11sb containing a piston 52C, a cylinder head 11sh having a mating surface 11a which faces the cylinder block 11sb, an intake port 21C opening to the combustion chamber 40, an exhaust port 31C opening to the combustion chamber 40, an intake valve 22C opening or closing a combustion chamber side opening of the intake port 21C and an exhaust valve 32C opening or closing a combustion chamber side opening of the exhaust port 31C. The intake port 21C and the exhaust port 31C are defined in the cylinder head 11sh.

The cylinder block 11sb and the cylinder head 11sh are coupled together with interposing a gasket 12 therebetween to define the combustion chamber 40. That is, the cylinder head 11sh and the cylinder block 11sb belong to the combustion chamber defining section that defines the combustion chamber 40.

The engine 11 also has a gas reserving chamber 120. The gas reserving chamber 120 includes a gas reserving section 120a reserving burned gases and a gas communicating passage section 120c through which the gas reserving section 120a and the exhaust port 31C communicate with each other.

The gas reserving section 120a and the gas communicating passage section 120c are defined in the cylinder head 11sh. The gas communicating passage section 120c is defined between the exhaust port 31C and the mating surface 11a. The gas reserving section 120a has an opening 120b (cylinder head opening) which opens to the mating surface 11a. The opening 120b is closed when the cylinder block 11sb and the cylinder head 11sh are coupled together with the gasket 12 being interposed therebetween.

The burned gases flow into the gas reserving chamber 120 (gas reserving section 120a) while the exhaust valve 32C opens in the expansion stroke or the exhaust stroke. The burned gases reserved in the gas reserving chamber 120 (gas reserving section 120a) are discharged to the combustion chamber 40 while the exhaust valve 32C opens in the intake stroke.

Additionally, the fresh air reserving chamber (fresh air reserving chamber 69C) can be defined in the combustion chamber defining section (cylinder block 11sb and cylinder head 11sh), similarly to the gas reserving chamber 120.

### (Action and Effect)

According to the four stroke internal combustion engine (engine 11) in the third embodiment of the present invention, because the gas reserving chamber 120 is positioned in the combustion chamber defining section (cylinder block 11sb and the cylinder head 11sh) the engine 11 can be downsized more than the arrangement in which the gas reserving chamber 100 is positioned out of the combustion chamber defining section. The engine 11 thus can be easily assembled.

Also, according to the four stroke internal combustion engine (engine 11) in the third embodiment of the present invention, the gas reserving section 120a is formed in the cylinder head 11sh and has the opening 120b that opens to the mating surface 11a. The opening 120b is closed when the cylinder block 11sb and the cylinder head 11sh are coupled together with the gasket 12 being interposed therebetween. Therefore, the gas reserving section 120a can be formed by casting without any cutting work. The cylinder head 11sh thus can be easily produced.

Further, according to the four stroke internal combustion engine (engine 11) in the third embodiment of the present invention, because the gas communicating passage section 120c is formed between the exhaust port 31C and the mating surface 11a, such a limited space of the cylinder head 11sh is effectively exploited to form the gas reserving section 120a and the gas communicating passage section 120c.

### [Fourth Embodiment]

In the following descriptions, with reference to drawings, a fourth embodiment of the present invention will be described. Also, in the following descriptions, different points between the embodiments described above and the fourth embodiment will be mainly described.

In the fourth embodiment, the gas reserving chamber reserving burned gases is provided on an outer part of the combustion chamber defining section (cylinder block and cylinder head) that forms the defining section.

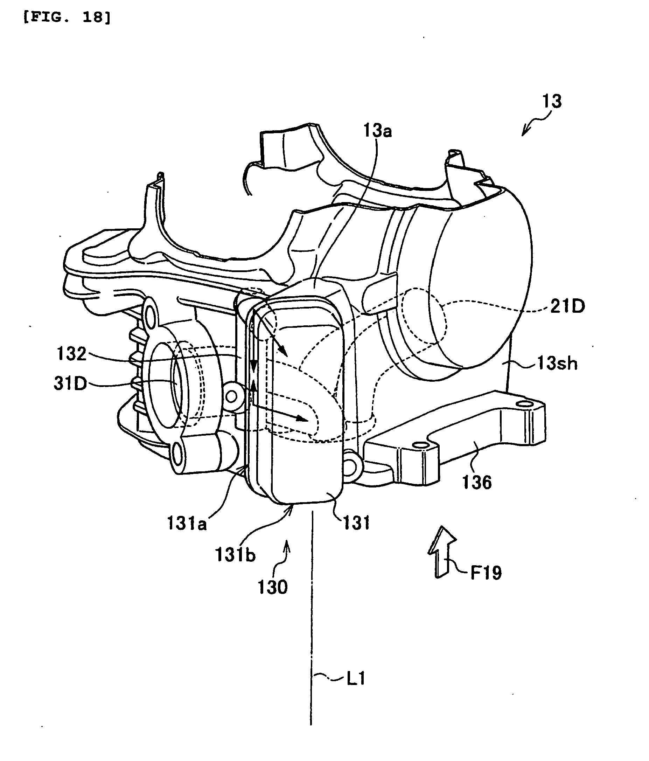

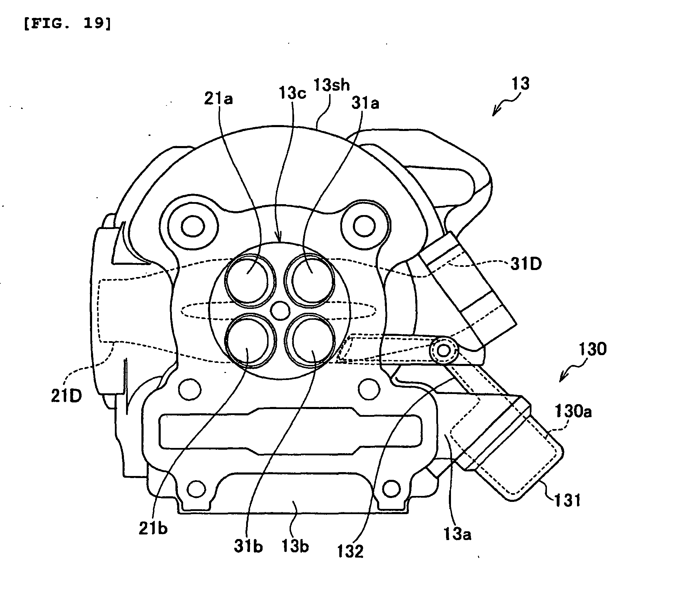

FIG. 18 is a schematic perspective view of a portion of a four stroke internal combustion engine (engine 13) constructed in accordance with the fourth embodiment of the present invention. Specifically, FIG. 18 is a schematic perspective view of a cylinder head 13sh constituting an engine 13. FIG. 19 is a bottom view of the cylinder head 13sh seen in direction F19 indicated in FIG. 18.

As shown in FIGs. 18 and 19, the engine 13 has an intake port 21D and an exhaust port 31D. The intake port 21D has intake port openings 21a, 21b selectively opened and closed by intake valves (not shown). The exhaust port 31D has exhaust port openings 31a, 31b selectively opened and closed by exhaust valves (not shown).

The cylinder head 13sh has an attachment part 13b used for attachment of the cylinder head 13sh to a cylinder block of the engine 13.

An outer part of the cylinder head 13sh (combustion chamber defining section), specifically the exhaust port 31D, is provided with a gas reserving chamber 130. The gas reserving chamber 130 projects from the outer part of the cylinder head 13sh. Specifically, the gas reserving chamber 130 projects in a tangential direction of a cylinder 13c (see FIG. 19). It should be noted that in FIG. 19, reference numeral 13c designates a combustion chamber of the cylinder head 13sh, which is, in fact, layered with a cylinder (not shown).

The gas reserving chamber 130 includes a proximal part 13a on the outer part of the cylinder head 13sh, and a cover 131 for closing the proximal part 13a. The cover 131 is attached to the proximal part 13a with bolts (not shown).

In this embodiment, the gas reserving chamber 130 has a rectangular parallelepiped shape. Specifically, the gas reserving chamber 130 has an edge 131a extending along an axis L1 of the cylinder (not shown), and an edge 131b perpendicular to the axis L1 having a longer length than the edge 131a.

The proximal part 13a projects from the cylinder head 13sh and is formed as an integral piece with the cylinder head 13sh. In a space defined by the proximal part 13a and the cover 131, a gas reserving section 130a reserving burned gases is formed.

The proximal part 13a is joined to a gas communicating passage section 132. The burned gases reserved in the gas reserving chamber 130 is discharged to the exhaust port 31D through the gas communicating passage section 132 (see the arrow indicated in the gas communicating passage section 132).

### (Action and Effect)

According to the four stroke internal combustion engine (engine 13) in the fourth embodiment of the present invention, the gas reserving chamber 130 is provided on the outer part of the cylinder head 13sh and the gas reserving chamber 130 projects from the outer part of the cylinder head 13sh. Further, the gas reserving chamber has a rectangular parallelepiped shape, with the edge 131a along the axis L1 of the cylinder (not shown) having a longer length than the edge 131b perpendicular to the axis L1.

As a result, even when the gas reserving chamber having an enough capacity is difficult to be provided in the cylinder head as in the third embodiment, this embodiment ensures the enough capacity of the gas reserving chamber 130 and provides the downsized engine 13.

In this embodiment, in the space defined by the proximal part 13a, the gas reserving section 130a reserving burned gases is formed, and the proximal part 13a is closed by the cover 131. This allows easier maintenance of the inside of the gas reserving section 130a.

Further, in this embodiment, the gas reserving section 130a is also formed in the space defined by the cover 131. As a result, using the cover 131 contributes to readily increasing the capacity of the gas reserving section 130a. Further, changing the size of the cover 131 allows an easy change in capacity of the gas reserving section 130a.

### [Other Embodiments]

Although contents of the present invention are disclosed through one embodiment of the present invention as described above, it should not be understood that the descriptions and drawings which are portions of the disclosure limit the present invention. The disclosure may provide the skilled persons in the art with various alternatives.

For example, feature parts of the embodiments and alternatives described above can be properly combined to realize four stroke internal combustion engines.

Specifically, it is applicable that, similarly to the alternative in the second embodiment described above, the exhaust passage (exhaust conduit 66) curves in the plan view of the combustion chamber defining section (cylinder block and cylinder head), at least a portion of the gas reserving chamber (gas reserving chamber 67C) is positioned in an inside area (area A1) more than the exhaust passage (exhaust conduit 66) that curves, in the plan view of the combustion chamber defining section, and, similarly to the third embodiment described above, the gas reserving chamber (gas reserving chamber 120) is positioned in the combustion chamber defining section (particularly, cylinder head 11sh).

According to the above arrangement, because at least the gas reserving chamber is positioned in the inside area A1 more than the exhaust passage that curves and the gas reserving chamber is positioned in the cylinder head, the limited space of the cylinder head can be effectively exploited to form the gas reserving chamber.

It is also applicable that, similarly to the alternative in the second embodiment described above, the intake passage (intake conduit 64) curves in the plan view of the combustion chamber defining section (cylinder block and cylinder head), at least a portion of the fresh air reserving chamber (fresh air reserving chamber 69C) is positioned in the inside area (area B1) more than the intake passage (intake conduit 64) that curves, in the plan view of the combustion chamber defining section, and the fresh air reserving chamber is positioned in the combustion chamber defining section (cylinder block 11sb and cylinder head 11sh).

Further, in the third embodiment described above, the gas reserving section 120a is formed in the cylinder head 11sh and has the opening 120b that opens to the mating surface 11a. The gas reserving section 120a, however, is not limited to such a structure and does not necessarily have the opening 120b opening to the mating surface 11a.

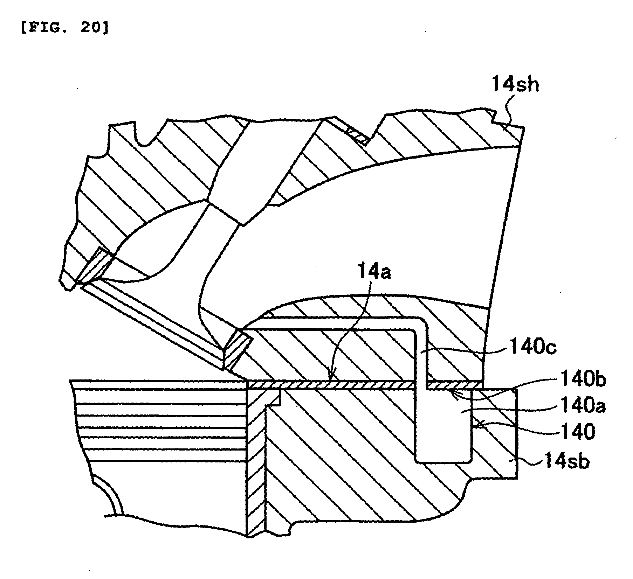

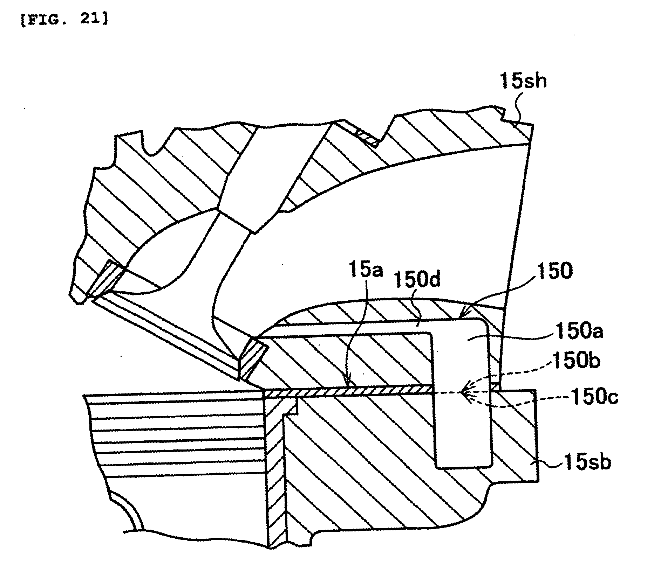

For example, the shape of the gas reserving section can be modified as described below. FIGs. 20 and 21 illustrate alternatives of the gas reserving section.

FIG. 20 is a partial, enlarged cross sectional view of a cylinder head 14sh and a cylinder block 14sb in accordance with an alternative of the third embodiment of the present invention. As shown in FIG. 20, a gas reserving chamber 140 is formed by a gas reserving section 140a and a gas communicating passage section 140c. The gas reserving section 140a is formed in the cylinder block 14sb instead of the cylinder head 14sh.

The gas reserving section 140a has an opening 140b (cylinder block opening) which opens to a mating surface 14a. In the alternative shown in FIG. 20, the opening 140b is closed by the cylinder block 14sb and the cylinder head 14sh coupled together.

FIG. 21 is a partial, enlarged cross sectional view of a cylinder head 15sh and a cylinder block 15sb in accordance with another alternative of the third embodiment of the present invention. As shown in FIG. 21, a gas reserving chamber 150 is formed by a gas reserving section 150a and a gas communicating passage section 150d. The gas reserving section 150a is formed in the cylinder head 15sh and the cylinder block 15sb.

Part of the gas reserving section 150a formed in the cylinder head 15sh has a cylinder head opening 150b which opens to a mating surface 15a. On the other hand, another part of the gas reserving section 150a formed in the cylinder block 15sb has a cylinder block opening 150c which opens to the cylinder head 15sh.

In the alternative shown in FIG. 20, coupling the cylinder block 15sb and the cylinder head 15sh allows communication between the cylinder head opening 150b and the cylinder block opening 150c.

As thus described, it is a matter of course that the present invention includes various embodiments or the like which are not described herein. Accordingly, the technical scope of the present invention is decided only by the invention specifying items according to the claims that are proper in light of the above descriptions.

### Industrial Applicability

The four stroke internal combustion engine according to the present invention can further improve fuel consumption and can decrease nitrogen oxides (NOx), without making the structure of the cylinder head part complicated. The present invention, therefore, provides a great advantage for its application to various types of internal combustion engines, such as engines.

## Claims

1. A four stroke internal combustion engine comprising:
a combustion chamber (40);
a combustion chamber defining section (11sb, 11sh; 14sb, 14sh; 15sb, 15sh) defining the combustion chamber (40);
an intake passage (21 C) opening to the combustion chamber (40);
an exhaust passage (31C) opening to the combustion chamber (40);
an intake valve (22C) opening or closing a combustion chamber (40) side opening of the intake passage (21C); and
an exhaust valve (32C) opening or closing a combustion chamber (40) side opening of the exhaust passage (31C),
wherein:
the combustion chamber defining section (11sb, 11sh; 14sb, 14sh; 15sb, 15sh) has a gas reserving chamber (120; 140; 150) communicating with the exhaust passage (31C) to reserve burned gases discharged from the combustion chamber (40);
the burned gases flow into the gas reserving chamber (120; 140; 150) while the exhaust valve (32C) opens in an expansion stroke or an exhaust stroke; and
**characterized in that**
the burned gases reserved in the gas reserving chamber (120; 140; 150) are discharged to the combustion chamber (40) through the exhaust passage (31 C) while the exhaust valve (32C) opens in an intake stroke.

2. The four stroke internal combustion engine according to Claim 1, wherein:
the gas reserving chamber (120) includes a gas reserving section (120a) reserving the burned gases and a gas communicating passage section (120c) through which the gas reserving section (120a) and the exhaust passage (31 C) communicate with each other;
the combustion chamber defining section (11sb, 11sh) includes a cylinder block (11sb) and a cylinder head (11sh) having a mating surface (11a) which faces the cylinder block (11sb);
the gas reserving section (120a) is formed in the cylinder head (11sh) and has a cylinder head opening (120b) which opens to the mating surface (11a); and
the cylinder block (11sb) and the cylinder head (11 sh) are coupled with each other to close the cylinder head opening (120b).

3. The four stroke internal combustion engine according to Claim 1, wherein:
the gas reserving chamber (140) includes a gas reserving section (140a) reserving the burned gases and a gas communicating passage section (140c) through which the gas reserving section (140a) and the exhaust passage (31C) communicate with each other;
the combustion chamber defining section (14sb, 14sh) includes a cylinder block (14sb) and a cylinder head (14sh) having a mating surface (14a) which faces the cylinder block (14sb);
the gas reserving section (140a) is formed in the cylinder block (14sb) and has a cylinder block opening (140b) which opens to the mating surface (14a); and
the cylinder block (14sb) and the cylinder head (14sh) are coupled with each other to close the cylinder block opening (140b).

4. The four stroke internal combustion engine according to Claim 1, wherein:
the gas reserving chamber (150) includes a gas reserving section (150a) reserving the burned gases and a gas communicating passage section (150d) through which the gas reserving section (150a) and the exhaust passage (31C) communicate with each other;
the combustion chamber defining section (15sb, 15sh) includes a cylinder block (15sb) and a cylinder head (15sh) having a mating surface (15a) which faces the cylinder block (15sb):
the gas reserving section (150a) is formed in the cylinder head (15sh) and the cylinder block (15sb), part of the gas reserving section (150a) formed in the cylinder head (15sh) having a cylinder head opening (150b) which opens to the mating surface (15a), the other part of the gas reserving section (150a) formed in the cylinder block (15sb) having a cylinder block opening (150c) which opens to the cylinder head (15sh); and
the cylinder head (15sh) and the cylinder block (15sb) are coupled with each other to communicate the cylinder head opening (150b) and the cylinder block opening (150c).

5. The four stroke internal combustion engine according to any one of Claims 2 to 4, wherein the exhaust passage (31C) is defined in the cylinder head (11sh; 14sh; 15sh); and
the gas communicating passage section (120c; 140c; 150d) is defined between the exhaust passage (31 C) and the mating surface (11a; 14a; 15a).

6. The four stroke internal combustion engine according to any one of Claims 2 to 4, wherein the combustion chamber (40) has a generally circular shape in a plan view; and at least a portion of the gas communicating passage section (120c; 140c; 150d) positioned closer to the exhaust passage (31C) is oriented in a preset rotational direction which parallels a peripheral portion of the combustion chamber (40).

7. The four stroke internal combustion engine according to any one of Claims 2 to 4, wherein at least a portion of the gas communicating passage section (120c; 140c; 150d) positioned closer to the exhaust passage (31C) extends along the exhaust passage (31C).

8. The four stroke internal combustion engine according to Claim 1, wherein:
the exhaust passage (31C) curves in a plan view of the combustion chamber defining section (11sb, 11 sh; 14sb, 14sh; 15sb, 15sh); and
at least a portion of the gas reserving chamber (120; 140; 150) is positioned in an inside area more than the exhaust passage (31C) that curves, in the plan view of the combustion chamber defining section (11sb, 11sh; 14sb, 14sh; 15sb, 15sh).

9. The four stroke internal combustion engine according to Claim 1, wherein the gas reserving chamber (130) is provided on an outer part of the combustion chamber defining section (13sh).

10. The four stroke internal combustion engine according to Claim 9, wherein the gas reserving chamber (130) projects from the outer part.

11. The four stroke internal combustion engine according to Claim 10, wherein:
the gas reserving chamber (130) includes a proximal part (13) on the outer part and a cover (131) for closing the proximal part (13); and
in a space defined by the proximal part (13), a gas reserving section (130a) reserving the burned gases is formed.

12. The four stroke internal combustion engine according to Claim 10, wherein in a space defined by the cover (131), a gas reserving section (130a) reserving the burned gases is formed.

13. The four stroke internal combustion engine according to Claim 12, wherein the gas reserving chamber (130) has a rectangular parallelepiped shape.

## Patentansprüche

1. Viertakt- Brennkraftmaschine, aufweisend:
eine Brennkammer (40);
einen brennkammerbildenden Abschnitt (11 sb, 11 sh; 14sb, 14sh; 15sb, 15sh), der die Brennkammer (40) bildet;
einen Einlasskanal (21 C), der sich in die Brennkammer (40) öffnet;
einen Auslasskanal (31 C), der sich in die Brennkammer (40) öffnet;
ein Einlassventil (22C), das eine brennkammerseitige (40)- Öffnung des Einlasskanales (21 C) öffnet oder schließt; und
ein Auslassventil (32C), das eine brennkammerseitige (40)- Öffnung des Auslasskanales (31 C) öffnet oder schließt,
wobei:
der brennkammerbildende Abschnitt (11 sb, 11 sh; 14sb, 14sh; 15sb, 15sh) eine gasrückhaltende Kammer hat, die mit dem Auslasskanal (31 C) in Verbindung ist,
um verbranntes Gas, abgegeben aus der Brennkammer (40), zurückzuhalten;
wobei das verbrannte Gas in die gasrückhaltende Kammer (120; 140; 150) strömt, während das Auslassventil (32C) in einem Ausdehnungstakt oder Auslasstakt öffnet; und
**dadurch gekennzeichnet, dass**
die verbrannten Gase, zurückgehalten in der gasrückhaltende Kammer (120; 140; 150), in die Brennkammer (40) durch den Auslasskanal (31 C) abgegeben werden, während das Auslassventil (32C)in einem Einlasstakt öffnet.

2. Viertakt- Brennkraftmaschine nach Anspruch 1, wobei:
die gasrückhaltende Kammer (120) einen Gasrückhalteabschnitt (120a) enthält,
der die verbrannten Gase zurückhält, und einen Gasverbindungskanalabschnitt (120c), durch den der Gasrückhalteabschnitt (120a) und der Auslasskanal (31 C) miteinander kommunizieren; wobei der brennkammerbildende Abschnitt (11sb, 11 sh; 14sb, 14sh; 15sb, 15sh) einen Zylinderblock (11 sb) und einen Zylinderkopf (11sh) mit einer Passoberfläche (11a) enthält, die sich dem Zylinderblock (11sb) zuwendet; der Gasrückhalteabschnitt (120a) in dem Zylinderkopf (11 sh) gebildet ist und eine Zylinderkopföffnung (120b) hat, die zu der Passoberfläche (11a) öffnet; und
der Zylinderblock (11sb) und der Zylinderkopf (11sh) miteinander gekuppelt sind, um die Zylinderkopföffnung (120b) zu schließen.

3. Viertakt- Brennkraftmaschine nach Anspruch 1, wobei:
die gasrückhaltende Kammer (140) einen Gasrückhalteabschnitt (140a) enthält,
der die verbrannten Gase zurückhält, und einen Gasverbindungskanalabschnitt (140c), durch den der Gasrückhalteabschnitt (140a) und der Auslasskanal (31 C) miteinander in Verbindung sind, der brennkammerbildende Abschnitt (14sb, 14sh) einen Zylinderblock (14sb) und einen Zylinderkopf (14sh) mit einer Passoberfläche (14a) enthält, die sich dem Zylinderblock (14sb) zuwendet;
der Gasrückhalteabschnitt (140a) in dem Zylinderblock (14sb) gebildet ist und eine Zylinderblocköffnung (140b) hat, die zu der Passoberfläche (14a) öffnet; und
der Zylinderblock (14sb) und der Zylinderblock (14sh) miteinander gekuppelt sind, um die Zylinderblocköffnung (140b) zu schließen.

4. Viertakt- Brennkraftmaschine nach Anspruch 1, wobei:
die gasrückhaltende Kammer (150) einen Gasrückhalteabschnitt (150a) enthält,
der die verbrannten Gase zurückhält, und einen Gasverbindungskanalabschnitt (150d), durch den der Gasrückhalteabschnitt (150a) und der Auslasskanal (31 C) miteinander in Verbindung sind;
der brennkammerbildende Abschnitt (15sb, 15sh) einen Zylinderblock (15sb) und einen Zylinderkopf (15sh) mit einer Passoberfläche (15a) enthält, die sich dem Zylinderblock (15sb) zuwendet;
der Gasrückhalteabschnitt (150a) in dem Zylinderkopf (15sh) und dem Zylinderblock (15sb) gebildet ist, ein Teil des Gasrückhalteabschnittes (150a), gebildet in dem Zylinderkopf (15sh), eine Zylinderkopföffnung (150b) hat, die zu der Passoberfläche (15a) öffnet, der andere Teil des Gasrückhalteabschnittes (150a), gebildet in dem Zylinderblock (15sb), eine Zylinderblocköffnung (150c) hat, die in den Zylinderkopf (15sh) öffnet; und
der Zylinderkopf (15sh) und der Zylinderblock (15sb) miteinander gekuppelt sind, um mit der Zylinderkopföffnung (150b) und der Zylinderblocköffnung (150c) in Verbindung zu sein.

5. Viertakt- Brennkraftmaschine nach einem der Ansprüche 2 bis 4, wobei der Auslasskanal (31 C) in dem Zylinderkopf (11 sh; 14sh; 15sh) gebildet ist; und der Gasverbindungskanalabschnitt (120c; 140c; 150d) zwischen dem Auslasskanal (31 C) und der Passoberfläche (11a; 14a; 15a) gebildet ist.

6. Viertakt- Brennkraftmaschine nach einem der Ansprüche 2 bis 4, wobei die Brennkammer (40) eine im Wesentlichen kreisförmige Form in der Draufsicht hat; und zumindest ein Abschnitt des Gasverbindungskanalabschnittes (120c; 140c; 150d), der näher an dem Auslasskanal (31 C) positioniert ist, in einer voreingestellten Drehrichtung ausgerichtet ist, die gleichlaufend zu einem Umfangsabschnitt der Brennkammer (40) ist.

7. Viertakt- Brennkraftmaschine nach einem der Ansprüche 2 bis 4, wobei sich zumindest ein Abschnitt des Gasverbindungskanalabschnittes (120c; 140c; 150d), der näher an dem Auslasskanal (31 C) positioniert ist, entlang des Auslasskanales (31 C) erstreckt.

8. Viertakt- Brennkraftmaschine nach Anspruch 1, wobei:
sich der Auslasskanal (31 C) in einer Draufsicht des brennkammerbildenden Abschnittes (11sb, 11 sh; 14sb, 14sh; 15sb, 15sh) krümmt; und
zumindest ein Abschnitt der gasrückhaltenden Kammer (120; 140; 150) mehr in einem Innenbereich als der Auslasskanal (31C), der sich krümmt, in der Draufsicht des brennkammerbildenden Abschnittes (11sb, 11sh; 14sb, 14sh; 15sb, 15sh) angeordnet ist.

9. Viertakt- Brennkraftmaschine nach Anspruch 1, wobei die gasrückhaltende Kammer (130) an einem äußeren Teil des brennkammerbildenden Abschnittes (13sh) vorgesehen ist.

10. Viertakt- Brennkraftmaschine nach Anspruch 9, wobei die gasrückhaltende Kammer (130) von dem äußeren Teil vorspringt.

11. Viertakt- Brennkraftmaschine nach Anspruch 10, wobei:
die gasrückhaltende Kammer (130) einen körpernahen Teil (13) an dem äußeren Teil und eine Abdeckung (131) zum Schließen des körpernahen Teils (13) enthält; und
in einem Raum, gebildet durch den körpernahen Teil (13), ein Gasrückhalteabschnitt (130a), der die verbrannten Gase zurückhält, gebildet ist.

12. Viertakt- Brennkraftmaschine nach Anspruch 10, wobei in einem Raum, gebildet durch die Abdeckung (131), ein Gasrückhalteabschnitt (130a), der die verbrannten Gase zurückhält, gebildet ist.

13. Viertakt- Brennkraftmaschine nach Anspruch 12, wobei die gasrückhaltende Kammer (130) eine rechtwinklige Parallelepipedform hat.

## Revendications

1. Moteur à combustion interne à quatre temps comprenant :
une chambre de combustion (40) ;
une section de définition de chambre de combustion (11sb 11sh ; 14sb, 14sh ; 15sb, 15sh) définissant la chambre de combustion (40) ;
un passage d'admission (21C) s'ouvrant sur la chambre de combustion (40) ;
un passage d'échappement (31C) s'ouvrant sur la chambre de combustion (40) ;
une soupape d'admission (22C) ouvrant ou fermant une ouverture latérale de chambre de combustion (40) du passage d'admission (21C) ; et
une soupape d'échappement (32C) ouvrant ou fermant une ouverture latérale de chambre de combustion (40) du passage d'échappement (31C),
dans lequel :
la section de définition de chambre de combustion (11sb, 11sh ; 14sb, 14sh ; 15sb, 15sh) possède une chambre de conservation de gaz (120 ; 140 ; 150) communiquant avec le passage d'échappement (31C) pour conserver des gaz brûlés déchargés en provenance de la chambre de combustion (40) ;
les gaz brûlés s'écoulent dans la chambre de conservation de gaz (120 ; 140 ; 150) tandis que la soupape d'échappement (32C) s'ouvre dans une course d'expansion ou une course d'échappement ; et
**caractérisé en ce que**
les gaz brûlés conservés dans la chambre de conservation de gaz (120 ; 140 ; 150) sont déchargés vers la chambre de combustion (40) à travers le passage d'échappement (31C) tandis que la soupape d'échappement (32C) s'ouvre dans une course d'admission.

2. Moteur à combustion interne à quatre temps selon la revendication 1, dans lequel :
la chambre de conservation de gaz (120) comporte une section de conservation de gaz (120a) conservant les gaz brûlés et une section de passage de communication de gaz (120c) à travers laquelle la section de conservation de gaz (120a) et le passage d'échappement (31C) communiquent l'un avec l'autre ;
la section de définition de chambre de combustion (11sb, 11sh comporte un bloc-cylindres (11sb) et une culasse (11sh présentant une surface d'ajustement (11a) qui fait face au bloc-cylindres (11sb) ;
la section de conservation de gaz (120a) est formée dans la culasse (11sh) et possède une ouverture de culasse (120b) qui s'ouvre sur la surface d'ajustement (11a) ; et
le bloc-cylindres (11sb) et la culasse (11sh) sont reliés l'un à l'autre pour fermer l'ouverture de culasse (120b).

3. Moteur à combustion interne à quatre temps selon la revendication 1, dans lequel :
la chambre de conservation de gaz (140) comporte une section de conservation de gaz (140a) conservant les gaz brûlés et une section de passage de communication de gaz (140c) à travers laquelle la section de conservation de gaz (140a) et le passage d'échappement (31C) communiquent l'un avec l'autre ;
la section de définition de chambre de combustion (14sb, 14sh) comporte un bloc-cylindres (14sb) et une culasse (14sh) présentant une surface d'ajustement (14a) qui fait face au bloc-cylindres (14sb) ;
la section de conservation de gaz (140a) est formée dans le bloc-cylindres (14sb) et possède une ouverture de bloc-cylindres (140b) qui s'ouvre sur la surface d'ajustement (14a) ; et
le bloc-cylindres (14sb) et la culasse (14sh) sont reliés l'un à l'autre pour fermer l'ouverture de bloc-cylindres (140b).

4. Moteur à combustion interne à quatre temps selon la revendication 1, dans lequel :
la chambre de conservation de gaz (150) comporte une section de conservation de gaz (150a) conservant les gaz brûlés et une section de passage de communication de gaz (150d) à travers laquelle la section de conservation de gaz (150a) et le passage d'échappement (31C) communiquent l'un avec l'autre ;
la section de définition de chambre de combustion (15sb, 15sh) comporte un bloc-cylindres (15sb) et une culasse (15sh) présentant une surface d'ajustement (15a) qui fait face au bloc-cylindres (15sb) ;
la section de conservation de gaz (150a) est formée dans la culasse (15sh) et le bloc-cylindres (15sb), une partie de la section de conservation de gaz (150a) formée dans la culasse (15sh) présentant une ouverture de culasse (150b) qui s'ouvre sur la surface d'ajustement (15a), l'autre partie de la section de conservation de gaz (150a) formée dans le bloc-cylindres (15sb) présentant une ouverture de bloc-cylindres (150c) qui s'ouvre sur la culasse (15sh) ; et
la culasse (15sh) et le bloc-cylindres (15sb) sont reliés l'un à l'autre pour faire communiquer l'ouverture de culasse (150b) et l'ouverture de bloc-cylindres (150c).

5. Moteur à combustion interne à quatre temps selon l'une quelconque des revendications 2 à 4, dans lequel le passage d'échappement (31C) est défini dans la culasse (11sh ; 14sh ; 15sh) ; et
la section de passage de communication de gaz (120c ; 140c ; 150d) est définie entre le passage d'échappement (31C) et la surface d'ajustement (11a ; 14a ; 15a).

6. Moteur à combustion interne à quatre temps selon l'une quelconque des revendications 2 à 4, dans lequel la chambre de combustion (40) présente une forme globalement circulaire dans une vue en plan ; et
au moins une partie de la section de passage de communication de gaz (120c ; 140c ; 150d) positionnée tout près du passage d'échappement (31C) est orientée dans un sens de rotation prédéfini qui est parallèle à une partie périphérique de la chambre de combustion (40).

7. Moteur à combustion interne à quatre temps selon l'une quelconque des revendications 2 à 4, dans lequel au moins une partie de la section de passage de communication de gaz (120c ; 140c ; 150d) positionnée tout près du passage d'échappement (31C) s'étend le long du passage d'échappement (31C).

8. Moteur à combustion interne à quatre temps selon la revendication 1, dans lequel :
le passage d'échappement (31C) se courbe dans une vue en plan de la section de définition de chambre de combustion (11sb, 11sh ; 14sb, 14sh ; 15sb, 15sh) ; et
au moins une partie de la chambre de conservation de gaz (120 ; 140 ; 150) est positionnée dans une zone intérieure au-delà du passage d'échappement (31C) qui se courbe, dans la vue en plan de la section de définition de chambre de combustion (11sb, 11sh ; 14sb, 14sh ; 15sb, 15sh).

9. Moteur à combustion interne à quatre temps selon la revendication 1, dans lequel la chambre de conservation de gaz (130) est disposée sur une partie extérieure de la section de définition de chambre de combustion (13sh).

10. Moteur à combustion interne à quatre temps selon la revendication 9, dans lequel la chambre de conservation de gaz (130) dépasse de la partie extérieure.

11. Moteur à combustion interne à quatre temps selon la revendication 10, dans lequel :
la chambre de conservation de gaz (130) comporte une partie proximale (13) sur la partie extérieure et un couvercle (131) pour fermer la partie proximale (13) ; i et
dans un espace défini par la partie proximale (13), une section de conservation de gaz (130a) conservant les gaz brûlés est formée.

12. Moteur à combustion interne à quatre temps selon la revendication 10, dans lequel, dans un espace défini par le couvercle (131), une section de conservation de gaz (130a) conservant les gaz brûlés est formée.

13. Moteur à combustion interne à quatre temps selon la revendication 12, dans lequel la chambre de conservation de gaz (130) présente une forme de parallélépipède rectangulaire.
